# EUROPÄISCHE PATENTSCHRIFT

(11) **EP 4 580 828 B1**
(45) Veröffentlichungstag und Bekanntmachung des Hinweises auf die Patenterteilung: **22.07.2026**
(21) Anmeldenummer: 23782771.2
(22) Anmeldetag: 11.09.2023
(51) Int. Cl.: B23K 26/0622, B23B 51/00, B23K 26/08, B23K 26/364

(54) **VERFAHREN ZUR LASERBASIERTEN BEARBEITUNG EINES LÄNGLICHEN WERKSTÜCKS UND LASERBEARBEITUNGSVORRICHTUNG ZUR DURCHFÜHRUNG DES VERFAHRENS**
METHOD FOR LASER-BASED MACHINING OF AN ELONGATE WORKPIECE, AND LASER MACHINING DEVICE FOR CARRYING OUT THE METHOD
PROCÉDÉ D'USINAGE AU LASER D'UNE PIÈCE ALLONGÉE ET DISPOSITIF D'USINAGE AU LASER POUR LA MISE EN OEUVRE DU PROCÉDÉ

(30) Priorität: 12.09.2022 DE 102022123237
(43) Veröffentlichungstag der Anmeldung: 09.07.2025
(73) Patentinhaber: Rollomatic S.A., 2525 Le Landeron (CH)
(72) Erfinder: KRUMM, Christian, 2607 Cortébert (CH); FREIDY, Mouhamad Ali, 2000 Neuchâtel (CH); DAVOLI, Mike, 1787 Mur (CH)
(74) Vertreter: Geitz Patentanwälte PartG mbB
(86) Internationale Anmeldenummer: PCT/EP2023/074936
(87) Internationale Veröffentlichungsnummer: WO 2024/056622

(56) Entgegenhaltungen:
- DE-A1- 102010 011 508
- DE-A1- 102014 109 613

## Beschreibung

Die Erfindung geht aus von einem Verfahren zur laserbasierten Bearbeitung eines länglichen Werkstücks und einer Laserbearbeitungsvorrichtung zur Durchführung des Verfahrens, siehe Ansprüche 1 und 13.

Es ist bekannt, Werkstücke mittels kurzer intensiver Laserpulse zu bearbeiten. Die Laserstrahlung mit hoher Leistungsdichte führt zu einer Erhitzung des Materials an der Oberfläche des Werkstücks. Die Oberfläche des Werkstücks erreicht dabei lokal eine so hohe Temperatur, dass das Material des Werkstücks verdampft oder sublimiert. Bei hoher Leistungsdichte des Lasers entsteht ein Plasma aus Elektronen und Ionen des abgetragenen Materials. Der Materialabtrag wird auch als Laserablation oder Laserverdampfen bezeichnet. Das Material kann dabei beispielsweise flächig in Schichten abgetragen werden. Ferner besteht die Möglichkeit, ein Werkstück mittels kontinuierlicher oder gepulster Laserstrahlung zu durchtrennen. Dies wird als Laserschneiden oder Laserstrahlschneiden bezeichnet. Die Parameter der Laserstrahlung müssen an das zu bearbeitende Material und die gewünschte Bearbeitung angepasst werden. Zu den Parametern der Laserstrahlung zählen die Wellenlänge und die mittlere Leistung. Ist die Laserstrahlung gepulst, gehören zu den Parametern ferner die Pulsenergie und die Pulsdauer.

Laserstrahl und Werkstück werden für die Laserbearbeitung definiert relativ zueinander ausgerichtet und gegebenenfalls bewegt, um Material innerhalb vorgegebener Bereiche des Werkstücks gezielt abzutragen und bestimmte Konturen an der Oberfläche des Werkstücks auszubilden. Hierzu gehört unter anderem das Erzeugen von Schneiden, sonstigen Kanten an Werkstücken und von Spannuten.

Eine Laserbearbeitungsvorrichtung ist mit einem Laser ausgestattet, welcher einen Laserstrahl erzeugt. Der Laserstrahl erstreckt sich entlang einer Strahlachse. Dabei entspricht die Strahlachse einer geometrischen Geraden. Der Laser umfasst einen Laserkopf, der den Laserstrahl mit seiner Strahlachse gezielt auf ein Werkstück richtet und diesen gegebenenfalls innerhalb einer vorgegebenen Kontur über die Oberfläche eines Werkstücks bewegt. Das Werkstück wird in einer Vorrichtung zur Ausrichtung und Positionierung angeordnet, welche bei einer Werkzeugmaschine auch als Aufspanneinrichtung bezeichnet wird. Diese Vorrichtung ist mit einer Vorrichtungsbasis, einer Werkstück-Fixiereinrichtung und einer Werkstück-Bewegungseinrichtung ausgestattet. Die Vorrichtungsbasis ist ortsfest angeordnet. Sie kann Teil der Maschinenbasis der Laserbearbeitungsvorrichtung sein. Die Werkstück-Fixiereinrichtung nimmt das Werkstück auf und spannt es fest ein, so dass sich die Position des Werkstücks relativ zur Werkstück-Fixiereinrichtung während der Bearbeitung des Werkstücks nicht verändert. Die Werkstück-Bewegungseinrichtung sorgt für eine Bewegung der Werkstück-Fixiereinrichtung relativ zur Vorrichtungsbasis. Da der Laserkopf der Laserbearbeitungsvorrichtung in Relation zu der Vorrichtungsbasis in der Regel ortsfest angeordnet ist, sorgt die Werkstück-Bewegungseinrichtung damit auch für eine Relativbewegung zwischen dem Laserkopf einerseits und der Werkstück-Fixiereinrichtung andererseits. Entsprechend wird dadurch ein an der Werkstück-Fixiereinrichtung eingespanntes Werkstück relativ zu einem von dem Laserkopf erzeugten Laserstrahl bewegt. Alternativ oder kumulativ kann der Laserstrahl bewegt werden, was ebenfalls zu einer Relativbewegung zwischen Werkstück und Laserstrahl führt. Dank der durch die Werkstück-Bewegungseinrichtung ausgelösten Relativbewegung kann damit eine Bearbeitung eines Werkstücks an seiner gesamten Oberfläche erfolgen, soweit die Werkstückoberfläche nicht durch die Werkstück-Fixiereinrichtung abgedeckt ist. Bei der Bearbeitung wird das Werkstück mit seiner Oberfläche unter verschiedenen Winkeln gegen den Laserstrahl ausgerichtet. Der Laserkopf kann mit einer Laserstrahl-Ablenkeinrichtung ausgestattet sein, die den Laserstrahl mittels optischer Komponenten gezielt ablenkt und dabei mit hoher Geschwindigkeit über eine Oberfläche des Werkstücks führt. Diese Laserstrahl-Ablenkeinrichtung wird häufig als auch Laser-Scanner oder als Laserscanning-Einrichtung bezeichnet. Sie sorgt für eine zusätzliche Relativbewegung von Laserstrahl und Werkstück. Diese zusätzliche Relativbewegung ist der Bewegung des Werkstücks, welche durch die Werkstück-Bewegungseinrichtung bewirkt wird, überlagert.

Zur Bearbeitung eines Werkstücks wird der Laserstrahl üblicherweise mit seiner Strahlachse derart zu einem zu bearbeitenden Werkstück ausgerichtet, dass die Strahlachse senkrecht zu einer Oberfläche des Werkstücks ausgerichtet ist. Anschließend wird schichtweise oder abschnittsweise Material an der Oberfläche eines Werkstücks abgetragen, bis das Werkstück eine gewünschte Form aufweist. Dabei kann das Werkstück in kleinen Bereichen, beispielsweise im Bereich einer Schneidkante, oder in größeren Abschnitten an der Oberfläche bearbeitet werden, beispielsweise entlang seiner gesamten Mantelfläche, insbesondere zur Erzeugung einer sich über den Umfang erstreckenden äußeren Kontur eines Werkstücks. Dies gilt auch, wenn aus einem zylindrischen Rohling ein längliches Werkzeug mit einem Schaft und einem Kopf hergestellt werden soll. Zu derartigen Werkzeugen zählen beispielsweise Bohrer, Fräser oder Reibahlen. Der Schaft derartiger Werkzeuge ist an einem Ende mit dem Kopf ausgestattet und an dem entgegengesetzten Ende so ausgebildet, dass er in eine Werkzeugaufnahme einer Maschine eingesetzt und mit dieser drehfest verbunden werden kann, so dass das Drehmoment der Maschine auf das Werkzeug übertragen wird. Im Bereich des Kopfes ist das Werkzeug mit einer oder mehreren Schneiden und zugehörigen Schneidkanten ausgestattet. Sie dienen dazu, dass das aus dem Werkstück hergestellte Werkzeug an seinem späteren Einsatzort von einem zu bearbeitenden Material Späne abträgt. Die Späne werden durch Nuten abgeführt, die an der Außenseite des Schaftes verlaufen und sich ausgehend vom Kopf in Richtung des dem Kopf entgegengesetzten Ende des Schaftes erstrecken. Die Nuten können parallel zu einer Längsachse des Schaftes des aus dem Werkstück hergestellten Werkzeugs oder nach Art einer Helix wendelförmig verlaufen. Die Helix ist charakterisiert durch ihre Ganghöhe h und ihren Gangwinkel θ, der auch als Steigungswinkel bezeichnet wird. Die Ganghöhe h entspricht derjenigen Strecke, um die sich die Helix bei einer vollen Umdrehung in Richtung der Werkstück-Längsachse windet. Der Gangwinkel oder Steigungswinkel θ wird berechnet aus der Ganghöhe h und dem Radius r der Helix: θ = arctan(h/(2πr)). Eine parallel zur Werkstück-Längsachse verlaufenden Nut hat einen Gangwinkel θ von 90°. Eine senkrecht zur Werkstück-Längsachse verlaufende, ringförmige Nut hat einen Gangwinkel θ von 0°. Damit am Einsatzort des aus dem Werkstück hergestellten Werkzeugs die Späne möglichst reibungsarm in den Nuten abgeführt werden, sollte die Oberfläche der Nuten glatt sein.

Bei der Erzeugung von Nuten am Schaft eines Werkstücks muss besonders viel Material über eine verhältnismäßig lange Strecke an der Werkstückoberfläche abgetragen werden.

Aus der DE 199 01 777 A1 ist ein Verfahren zur Herstellung endodontischer Instrumente mittels Laser bekannt. Dabei wird mit einem Laser an der Oberfläche eines Instrumentenrohlings eine Wendelnut erzeugt, indem der Strahl eines hochfokussierten Nd:YAG-Lasers oder CO₂-Lasers auf die Oberfläche des Rohlings radial oder sekantial gerichtet wird und diese linienartig abrastert.

Ferner sind aus der DE 10 2010 011 508 A1 eine Vorrichtung und ein Verfahren zur Herstellung eines Werkzeugs mittels Laserbearbeitung bekannt, bei denen an einem Rohling eine Spannut und eine Schneidkante erzeugt werden. Dabei werden die Laserstrahlimpulse eines Lasers mit einer Ablenkeinrichtung auf vorgegebene Auftreffstellen innerhalb einer Pulsfläche auf den Rohling gerichtet. Mit einer Positioniereinrichtung wird eine Relativbewegung zwischen dem Rohling und der Pulsfläche ausführt. Zur Erzeugung der Spannut wird der Laserstrahl im wesentlichen in radialer Richtung auf das längliche Werkstück gerichtet. Dabei wird schichtweise Material abgetragen, bis die Nut die vorgegebene Tiefe aufweist.

Die aus der DE 199 01 777 A1 und der DE 10 2010 011 508 A1 bekannten Verfahren weisen den Nachteil auf, dass der Laserstrahl im wesentlichen senkrecht auf die zu erzeugende Nutoberfläche gerichtet wird und die erzeugte Nutoberfläche daher eine hohe Oberflächenrauheit besitzt.

Aus der DE 10 2014 109 613 A1 (offenbarend den Oberbegriff der Ansprüche 1 und 13) ist zwar ein Verfahren zur Erzeugung einer Spannut an einem stabförmigen Werkzeug bekannt, bei dem eine Nut mit glatter Oberfläche an der Oberfläche des Werkzeugs erzeugt wird, jedoch weist das Verfahren den Nachteil einer geringen Abtragsrate auf. Im Unterschied zu den Verfahren der DE 199 01 777 A1 und der DE 10 2010 011 508 A1 wird beim Materialabtrag gemäß DE 10 2014 109 613 A1 der Laserstrahl im wesentlichen tangential zu der zu erzeugenden Nutoberfläche ausgerichtet. Mittels einer Ablenkeinrichtung wird das Laserstrahl jedoch entlang einer Pulsbahn geführt, die eine Pulsfläche ausfüllt, wobei die Pulsfläche der Querschnittsfläche des zu entfernenden Materialabschnitts in der Nut entspricht. Diese Strahlführung beansprucht viel Zeit.

Der Erfindung liegt die Aufgabe zugrunde, ein Verfahren zur laserbasierten Bearbeitung eines länglichen Werkstücks und eine Laserbearbeitungsmaschine zur Verfügung zu stellen, mit denen durch Materialabtrag mittels eines Laserstrahls an dem Werkstück mindestens eine Nut mit definierter Nutoberfläche erzeugt wird und die Nut sich zumindest entlang eines Abschnitts an der Außenseite des Schaftes des Werkstücks erstreckt, wobei der Materialabtrag mit hohen Abtragsraten erfolgt und die dabei erzeugte Nut eine glatte Oberfläche mit geringer Oberflächenrauheit aufweist.

Diese Aufgabe wird durch ein Verfahren mit den Merkmalen des Anspruchs 1 und durch eine Laserbearbeitungsvorrichtung mit den Merkmalen des Anspruchs 13 gelöst. Das Verfahren gemäß Anspruch 1 zeichnet sich dadurch aus, dass das Werkstück in einer Werkstück-Fixiereinrichtung einer Laserbearbeitungseinrichtung angeordnet wird, wobei ein erstes Ende des Schaftes des Werkstücks in der Werkstück-Fixiereinrichtung der Laserbearbeitungsvorrichtung aufgenommen ist, und dass Material mit dem Laserstrahl ausgehend von einem dem ersten Ende abgewandten zweiten Ende des Schaftes in Richtung des ersten Endes oder in umgekehrter Richtung abgetragen wird, wobei der Laserstrahl eine besondere Ausrichtung aufweist und entlang einer besonderen Laserbahn geführt wird. Das erste Ende des Schaftes wird im folgenden als erstes Schaftende und das zweite Ende des Schaftes als zweites Schaftende bezeichnet. Dabei wird eine Nut erzeugt, die sich zumindest entlang eines Abschnitts an der Außenseite des Schaftes zwischen einem ersten Nutende und einem zweiten Nutende erstreckt, wobei das erste Nutende in axialer Richtung bezogen auf die Werkstück-Längsachse zu dem zweiten Nutende versetzt ist. Das erste Nutende ist dem ersten Schaftende zugewandt, während das zweite Nutende dem zweiten Schaftende zugewandt ist. Zum Materialabtrag wird der Laserstrahl mit seiner Strahlachse auf die Oberfläche des Werkstücks gerichtet und entlang einer Laserbahn geführt. Diese Laserbahn verläuft während des gesamten Materialabtrags ausschließlich parallel zu einer Nut-Profil-Kurve, die der Schnittmenge zwischen der zu erzeugenden Nutoberfläche und einer geometrischen Ebene entspricht. Die geometrische Ebene ist ein gedankliches Hilfsmittel, mit dem die Laserbahn beschrieben wird. Die geometrische Ebene befindet sich stets zusammen mit dem Auftreffpunt des Laserstrahls auf das Werkstück an der Stelle, an der an dem Werkstück mit dem Laserstrahl Material abgetragen wird. Daher wird die geometrische Ebene während des fortschreitenden Materialabtrags in Längsrichtung des Werkstücks verschoben, um die Nut zwischen dem ersten Nutende und dem zweiten Nutende zu erzeugen. Dabei ist die geometrische Ebene unter einem Winkel β zu der Werkstück-Längsachse ausgerichtet, wobei für den Winkel β gilt: 90° ≥ β ≥ Steigungswinkel der Nut. Die Werkstück-Längsachse ist dabei eine geometrische Gerade, die sich in Längsrichtung des länglichen Werkstücks durch das Werkstück hindurch erstreckt. Die geometrische Ebene erstreckt sich ebenfalls durch das Werkstück. Der Schnittpunkt von Werkstück-Längsachse und geometrischer Ebene liegt in dem Werkstück. Die geometrische Ebene wird zusammen mit der Nut-Profil-Kurve und der Laserbahn während des Materialabtrags zwischen dem ersten Nutende und dem zweiten Nutende in axialer Richtung bezogen auf die Werkstücks-Längsachse verschoben. Während des gesamten Materialabtrags zwischen dem ersten Nutende und dem zweiten Nutende ist der Abstand d zwischen der Nut-Profilkurve und der Laserbahn fest vorgegeben und wird nicht verändert. Der Abstand d zwischen der Nut-Profilkurve und der Laserbahn ist derart vorgegeben, dass das Material des Werkstücks, das sich in der geometrischen Ebene auf der der Nut-Profil-Kurve abgewandten Seite der Laserbahn befindet, beim Führen des Laserstrahls entlang der Laserbahn aufgrund der Leistungsdichte des Laserstrahls vollständig sublimiert oder verdampft. Der Abstand zwischen der Laserbahn und der Nut-Profil-Kurve ist daher abhängig von der Leistungsdichte des Lasers. Der Laser erzeugt kurze Laserpulse mit hoher Energie. Durch die kurzen Laserpulse findet in dem Bereich, in dem der Laserstrahl auf die Oberfläche des Werkstücks auftrifft, ein hoher Energieeintrag statt, so dass dieser Bereich stark erhitzt wird und das Material des Werkstücks in diesem Bereich sublimiert oder verdampft. Da die Laserpulse jedoch sehr kurz sind, breitet sich die Wärme in dem Werkstück vernachlässigbar wenig aus. Der erhitzte Bereich ist daher lokal begrenzt. Dies ist von Vorteil, da auf diese Weise eine unerwünschte Verformung des Werkstücks unter Wärmeeinwirkung verhindert werden kann. Je höher die Leistungsdichte und damit der Energieeintrag in die Oberfläche des Werkstücks ist, um so mehr Material kann innerhalb eines vorgegeben Zeitraums abgetragen werden. Gegebenenfalls spielen dabei auch die Ausdehnung des Laserstrahls an der Auftreffstelle auf die Werkstückoberfläche und/ oder das Material des Werkstücks eine Rolle.

Die geometrische Ebene wird so relativ zu der Werkstück-Längsachse ausgerichtet, dass der Laserstrahl entlang der Laserbahn geführt werden kann, ohne in unerwünschter Weise mit dem Werkstück zu kollidieren. Insbesondere darf der Laserstrahl nur in dem Bereich auf die Oberfläche des Werkstücks treffen, in dem ein Materialabtrag erfolgen soll. Eine Wechselwirkung des Laserstrahls mit anderen Bereichen des Werkstücks müssen vermieden werden. Der Winkel β zwischen der geometrischen Ebene und der Werkstücks-Längsachse wird so eingestellt, dass die Laserbahn als Schnittmenge zwischen der geometrischen Ebene und der zu erzeugenden Nutoberfläche eine kollisionsfreie Führung des Laserstrahls in dem vorgegebenen Winkelbereich zwischen der zu erzeugenden Nutoberfläche und der Strahlachse des Laserstrahls ermöglicht. Dabei ist der Winkel β kleiner oder gleich 90° und größer oder gleich dem Steigungswinkel der Nut. Wenn die Nut parallel zu der Werkstück-Längsachse verläuft und damit einen Steigungswinkel von 90° aufweist, entspricht der Winkel β stets 90°.

Die Laserbahn wird hinsichtlich ihres Abstandes d zur Nut-Profil-Kurve so vorgegeben, dass das gesamte Material des Werkstücks, das sich bezogen auf die Werkstück-Längsachse außerhalb der Laserbahn befindet, beim Führen des Laserstrahls entlang der Laserbahn abgetragen wird. Wenn das Werkstück einen kleinen Querschnitt aufweist und/ oder die Nut nicht tief ist, kann es ausreichen, dass eine Laserbahn parallel zur Nut-Profil-Kurve definiert wird und beim Führen des Laserstrahls entlang dieser einen Laserbahn bereits das gesamte Material außerhalb der Nut-Profil-Kurve abgetragen wird, so dass die Nutoberfläche in diesem Bereich erzeugt wird. In dem Fall reicht es aus, wenn die geometrische Ebene, die Nut-Profil-Kurve und die Laserbahn einmal von dem ersten Nutende zu dem zweiten Nutende oder umgekehrt vorgeschoben wird, dabei der Abstand d vorgegeben ist und mit dem Laser das Material abgetragen wird, um die Nut zu bilden. Weist jedoch das Werkstück einen großen Durchmesser und/ oder eine tiefe Nut auf, muss das Material schichtweise abgetragen werden. Beim Abtragen einer ersten Schicht befindet sich die Laserbahn an einer ersten Position nahe der Außenseite des noch unbearbeiteten Werkstücks. In diesem ersten Schritt weist die Laserbahn einen ersten Abstand d1 zur Nut-Profil-Kurve auf. Der Materialabtrag zwischen dem ersten Nutende und dem zweiten Nutende findet bei dieser ersten Schicht mit diesem Abstand d1 statt. Wenn das Material dieser ersten Schicht, welche sich zwischen dem ersten Nutende und dem zweiten Nutende erstreckt, abgetragen ist, wird die Laserbahn in einem zweiten Schritt in Richtung der Nut-Profil-Kurve vorgeschoben, so dass sie sich an einer zweiten Position befindet. In diesem zweiten Schritt weist die Laserbahn einen zweiten Abstand d2 zur Nut-Profil-Kurve auf, wobei der zweite Abstand d2 kleiner ist als der erste Abstand d1. Der Materialabtrag zwischen dem ersten Nutende und dem zweiten Nutende findet bei dieser zweiten Schicht mit diesem Abstand d2 statt. Es werden so viele Schichten abgetragen, bis die Nut erzeugt ist. Hierzu wird die Laserbahn nach dem Abtragen jeder Schicht so oft schrittweise in Richtung der Nut-Profil-Kurve vorgeschoben, bis das gesamte Material außerhalb der zu erzeugenden Nut-Profil-Kurve abgetragen ist.

Innerhalb des Abtragens einer Schicht, welche sich von dem ersten Nutende bis zu dem zweiten Nutende erstreckt, wird der Abstand d zwischen der Nut-Profil-Kurve und der Laserbahn nicht geändert. Erst wenn eine Schicht vom ersten bis zum zweiten Nutende abgetragen ist, und noch nicht ausreichend Material entfernt ist, um die vorgegebene Nut zu bilden, wird der Abstand d geändert. Anschließend wird eine weitere Schicht des Materials entfernt, wobei sich die Schicht vom ersten bis zum zweiten Nutende erstreckt.

Der Laserstrahl wird mit seiner Strahlachse derart entlang der Laserbahn geführt, dass die Strahlachse an dem Auftreffpunkt auf das Werkstück mit einer Tangente an die zu erzeugende Nutoberfläche einen Winkel δ einschließt, wobei 1° ≤ δ ≤ 10°. Dabei ist die Strahlachse in die der Werkstück-Längsachse entgegen gesetzte Richtung geneigt. Bei einer tangentialen Ausrichtung des Laserstrahls wäre der Winkel δ = 0°.Die Strahlachse des Laserstrahls verläuft somit an der Auftreffstelle nicht tangential zu der Nutoberfläche, sondern gegenüber der Tangente leicht geneigt. Durch die Ausrichtung des Laserstrahls mit einer Neigung gegen die Werkstückoberfläche, an der der Materialabtrag stattfindet, und damit gegen die geometrische Ebene, wird verhindert, dass an der zu erzeugenden Nutoberfläche verdampftes oder sublimiertes Material abgeschieden wird und dass diese Nutoberfläche des Werkstücks in unerwünschter Weise verbrannt wird. Diejenigen Abschnitte, auf die der Laserstrahl auftrifft, werden beidem Materialabtrag entfernt. Die erzeugte Nutoberfläche weist entsprechend nach der Laserbearbeitung eine sehr gute Oberflächenqualität mit geringer Rauheit auf. Hierdurch unterscheidet sich das Verfahren von den Verfahren gemäß DE 199 01 777 A1 und DE 10 2010 011 508 A1.

Da der Laserstrahl beim Materielabtrag entlang einer Laserbahn geführt wird, die ausschließlich parallel zu der Nut-Profil-Kurve ist und einen fest vorgegebenen Abstand d zu Nut-Profil-Kurve aufweist, wobei der Abstand d in Abhängig von der Leistungsdichte vorgegeben und eingestellt wird, findet der Materialabtrag in einem wesentlich kürzeren Zeitraum statt. Es werden daher hohe Abtragsraten erreicht. Der Laserstrahl wird im Unterschied zu der DE 10 2014 109 613 A1 nicht über die gesamte Querschnittsfläche des zur entfernenden Materialabschnitts in zwei Dimensionen geführt, sondern nur entlang der sich in einer Dimension erstreckenden Laserbahn. Dabei wird ausgenutzt, dass nicht nur das Material unmittelbar an den Auftreffstellen der Laserbahn, sondern auch außerhalb der Laserbahn entfernt wird. Hierzu wird das gesamte Material des Werkstücks außerhalb der Laserbahn in den gasförmigen Aggregatzustand überführt, ohne dass dabei der Laserstrahl großflächig über den gesamten abzutragenden Bereich geführt wird. Die zu der Nut-Profil-Kurve parallele Laserbahn begrenzt keine zweidimensionale Fläche, innerhalb der der Laserstrahl auf die Oberfläche auftrifft und das Material nur an den Auftreffstellen abgetragen wird. Die zu der Nut-Profil-Kurve parallele Laserbahn begrenzt auch keine zweidimensionale Fläche, die durch eine Relativbewegung zwischen Laserstrahl und Werkstück relativ zum Werkstück bewegt wird, um flächig Material abzutragen. Die Abtragsrate ist bei dem erfindungsgemäßen Verfahren auch dann deutlich höher, wenn das Material in mehreren Schichten mit unterschiedlichen Abständen d1, d2, etc. abgetragen wird.

Der Laserstrahl hat einen Durchmesser, der durch eine Laseroptik eingestellt und vorgegeben wird. Um eine besonders hohe Energiedichte an der Auftreffstelle des Laserstrahls auf die Oberfläche des Werkstücks zu erreichen, kann der Fokus des Laserstrahls so eingestellt werden, dass er sich an der Werkstückoberfläche befindet. Die Strahlachse verläuft im Zentrum des Laserstrahls. Die Laserbahn wird durch die Bewegung der Strahlachse definiert. Dies bedeutet, dass sich der Laserstrahl an den Auftreffstellen auf die Werkstückoberfläche auch seitlich zu der Laserbahn erstreckt und dass ein Materialabtrag nicht nur direkt auf der Laserbahn erfolgt, sondern in einem Abschnitt seitlich der Laserbahn, der durch den Durchmesser des Laserstrahls an den Auftreffstellen auf die Werkstückoberfläche bestimmt ist. Um zu vermeiden, dass der Materialabtrag tiefer in das Werkstück hinein erfolgt als die vorgegebene Nutoberfläche, verläuft die Laserbahn stets parallel zu der Nut-Profil-Kurve und mit einem Mindestabstand zu der Nut-Profil-Kurve, der durch den Durchmesser des Laserstrahls vorgegeben ist.

Nach einer vorteilhaften Ausgestaltung der Erfindung wird das Material in mehreren Schichten abgetragen. Dabei wird der Laserstrahl während des Abtragens einer sich vom ersten Nutende bis zum zweiten Nutende erstreckenden ersten Schicht entlang einer zu der Nut-Profil-Kurve parallelen ersten Laserbahn geführt, die während des Abtragens der ersten Schicht einen ersten Abstand d1 zu der Nut-Profil-Kurve aufweist. Anschließend wird der Laserstrahl während des Abtragens einer sich vom ersten Nutende bis zum zweiten Nutende erstreckenden zweiten Schicht entlang einer zu der Nut-Profil-Kurve parallelen zweiten Laserbahn geführt, die während des Abtragens der zweiten Schicht einen zweiten Abstand d2 zu der Nut-Profil-Kurve aufweist. Dabei ist der zweite Abstand d2 kleiner ist als der erste Abstand d1.

Nach einer weiteren vorteilhaften Ausgestaltung der Erfindung wird in weiteren Schichten entlang weiterer Laserbahnen mit abnehmenden Abständen zu der Nut-Profil-Kurve Material abgetragen, bis die Nutoberfläche erzeugt ist.

Nach einer weiteren vorteilhaften Ausgestaltung der Erfindung erfolgt der Materialabtrag mittels eines gepulsten Laserstrahls.

Nach einer weiteren vorteilhaften Ausgestaltung der Erfindung weisen die Laserpulse eine Pulsdauer von maximal 10 ps auf. Die Pulsdauer ist damit 10 ps oder kürzer. Zu Lasern mit derartigen ultrakurzen Laserpulsen zählen beispielsweise Femtosekundenlaser.

Nach einer weiteren vorteilhaften Ausgestaltung der Erfindung wird der Laserstrahl mehrfach entlang der Laserbahn geführt. Dabei wird der Laserstrahl entlang der Laserbahn zunächst in die eine Richtung und dann in die entgegen gesetzte Richtung bewegt. Der Laserstrahl kann zum Materialabtrag einmal oder mehrmals entlang derselben Laserbahn geführt werden. Dies hängt davon ab, ob nach einmaligem Führen entlang der Laserbahn bereits ein Materialabtrag in einem vorgegebenen Umfang erfolgt. Zum mehrmaligen Führen das Laserstrahls entlang der Laserbahn kann die Richtung, in der der Laserstrahl entlang der Laserbahn geführt wird, beibehalten oder geändert werden.

Die Nut wird entweder ausgehend von dem ersten Nutende oder ausgehend von dem zweiten Nutende erzeugt. Mit fortschreitendem Materialabtrag wird die geometrische Ebene, in der die Nut-Profil-Kurve verläuft, vom ersten Nutende zum zweiten Nutende vorgeschoben oder vom zweiten Nutende zum ersten Nutende. Das zweite Nutende befindet sich in der Regel unmittelbar an dem zweiten Ende des Schaftes, welches mit dem Kopf des aus dem Werkstück hergestellten Werkzeugs ausgestattet ist. Das erste Nutende ist in der Regel mit einem Abstand zum ersten Ende des Schaftes an dem Schaft angeordnet. In dem Abschnitt des Schaftes, der für die Befestigung des aus dem Werkstück hergestellten Werkzeugs in der Werkzeugaufnahme einer Maschine vorgesehen ist, befindet sich in der Regel keine Nut.

Nach einer weiteren vorteilhaften Ausgestaltung der Erfindung wird nach dem einmaligen oder mehrmaligen Führen des Laserstrahls entlang der zur Nut-Profil-Kurve parallelen Laserbahn von einem Ende zum anderen Ende der Laserbahn das Werkstück mit der Werkstück-Bewegungseinrichtung in Richtung der Werkstück-Längsachse bewegt und das Werkstück dabei relativ zu dem Laserstrahl vorgeschoben. Dies sorgt für eine fortschreitende Laserbearbeitung des Werkstücks in Richtung der Werkstück-Längsachse.

Nach einer weiteren vorteilhaften Ausgestaltung der Erfindung wird das Werkstück bei der Laserbearbeitung durch die Werkstück-Bewegungseinrichtung um die Werkstück-Längsachse gedreht. Durch die Drehung wird das einmalige oder mehrmalige Führen des Laserstrahls entlang der zur Nut-Profil-Kurve parallelen Laserbahn von einem Ende zum anderen Ende der Laserbahn unterstützt.

Nach einer weiteren vorteilhaften Ausgestaltung der Erfindung entspricht der Abstand zwischen Nut-Profil-Kurve und Laserbahn dem halben Durchmesser des Laserstrahls an seiner Auftreffstelle auf die Werkstückoberfläche. Alternativ kann der Abstand zwischen Nut-Profil-Kurve und Laserbahn auch größer sein.

Nach einer weiteren vorteilhaften Ausgestaltung der Erfindung ist einer ersten Bewegung des Laserstrahls entlang der Laserbahn eine zweite Bewegung des Laserstrahls überlagert. Diese zweite Bewegung wird mittels einer optischen Laserstrahl-Ablenkungseinrichtung erzeugt. Hierbei kann es sich beispielsweise um einen Laser-Scanner handeln. Dabei ist die Geschwindigkeit der zweiten Bewegung größer als die der ersten Bewegung. Die zweite Bewegung kann dafür sorgen, dass der Laserstrahl in offenen oder geschlossenen Kurven entlang der zur Nut-Profil-Kurve parallelen Laserbahn bewegt wird. Dadurch wird der Durchmesser des Materialabtrags entlang der Laserbahn in Relation zu dem Durchmesser des Laserstrahls vergrößert.

Nach einer weiteren vorteilhaften Ausgestaltung der Erfindung erfolgt die zweite Bewegung entlang einer Kurve, die einen Durchmesser aufweist. Der Abstand zwischen Nut-Profil-Kurve und Laserbahn ist gleich groß wie oder größer als der halbe Durchmesser der Kurve dieser zweiten Bewegung.

Nach einer weiteren vorteilhaften Ausgestaltung der Erfindung wird mit dem Verfahren ein Schneidwerkzeug hergestellt, beispielsweise ein Bohrer, ein Fräser oder eine Reibahle.

Die erfindungsgemäße Laserbearbeitungsvorrichtung ist mit einer das Werkstück aufnehmenden und fixierenden Werkstück-Fixiereinrichtung, einer Werkstück-Bewegungseinrichtung, welche die Werkstück-Fixiereinrichtung relativ zu einer Vorrichtungsbasis bewegt und mit einem Laser ausgestattet, dessen Laserstrahl mit seiner geometrischen Strahlachse auf das in der Werkstück-Fixiereinrichtung aufgenommene Werkstück gerichtet ist, wobei die Laserbearbeitungsvorrichtung ausgebildet ist, das in der Werkstück-Fixiereinrichtung angeordnete Werkstück relativ zu dem Laserstrahl auszurichten und den Laserstrahl relativ zu dem Werkstück zu bewegen. Ferner weist die Laserbearbeitungsvorrichtung eine Steuerungseinrichtung auf, die die Laserbearbeitungsvorrichtung gemäß einem der Ansprüche 1 bis 12 steuert.

Nach einer weiteren vorteilhaften Ausgestaltung der Erfindung ist die Laserbearbeitungsvorrichtung mit einer Laserstrahl-Ablenkungseinrichtung ausgestattet, welche eine zweite Bewegung des Laserstrahls erzeugt. Diese zweite Bewegung des Laserstrahls ist der ersten Bewegung des Laserstrahls entlang der zu der Nut-Profil-Kurve parallelen Laserbahn überlagert.

Weitere Vorteile und vorteilhafte Ausgestaltungen der Erfindung sind der nachfolgenden Beschreibung, der Zeichnung und den Ansprüchen entnehmbar.

### Zeichnung

In der Zeichnung ist ein Ausführungsbeispiel des Erfindungsgegenstandes dargestellt. Es zeigen:
- Figur 1: ein aus einem Werkstück hergestelltes Werkzeug in perspektivischer Darstellung,
- Figur 2: Werkzeug gemäß Figur 1 in einer Aufsicht auf den Kopf,
- Figur 3: zylindrisches Werkstück, aus welchem das Werkzeug gemäß Figur 1 und 2 hergestellt wird,
- Figur 4: Werkstück gemäß Figur 3 nach dem Erzeugen zweier Nuten in perspektivischer Darstellung,
- Figur 5: Werkstück gemäß Figur 4 in einer Aufsicht auf das zweite Ende,
- Figur 6: Abschnitt des Werkstücks zu Beginn der Durchführung des Verfahrens,
- Figur 7: Aufsicht auf das Werkstück gemäß Figur 6,
- Figur 8: Aufsicht auf das Werkstück gemäß Figur 6 nach dem Materialabtrag in einer ersten Schicht,
- Figur 9: zweites Schaftende des Werkstücks in perspektivischer Darstellung nach dem Materialabtrag der ersten Schicht gemäß Figur 8,
- Figur 10: zweites Schaftende des Werkstücks gemäß Figur 9 mit der Laserbahn zum Materialabtrag der zweiten Schicht,
- Figur 11: zweites Schaftende des Werkstücks in perspektivischer Darstellung nach dem Materialabtrag der zweiten Schicht gemäß Figuren 8 und 10,
- Figur 12: Teil des Werkstücks gemäß Figuren 6 bis 11, wobei ein Teil der ersten Schicht in der Nut abgetragen ist,
- Figuren: 13a bis 13g Teil des Werkstücks gemäß Figur 6 bis 11: Materialabtrag einer ersten Schicht in verschiedenen Schritten,
- Figuren: 14a bis 14e Teil des Werkstücks gemäß Figuren 6 bis 11: Materialabtrag einer zweiten Schicht in verschiedenen Schritten,
- Figur 15: Darstellung der Führung des Laserstrahls in einer ersten Bewegung entlang der Laserbahn und in einer überlagerten zweiten Bewegung,
- Figur 16: erstes Ausführungsbeispiel der Kurve der zweiten Bewegung,
- Figur 17: zweites Ausführungsbeispiel der Kurve der zweiten Bewegung,
- Figur 18: Werkstück in perspektivischer Ansicht mit einer geometrischen Ebene, die mit der Werkstück-Längsachse einen Winkel von 70° einschließt,
- Figur 19: Werkstück gemäß Figur 16 mit Materialabtrag in der Nut,
- Figur 20: Laserbearbeitungsvorrichtung.

### Beschreibung des Ausführungsbeispiels

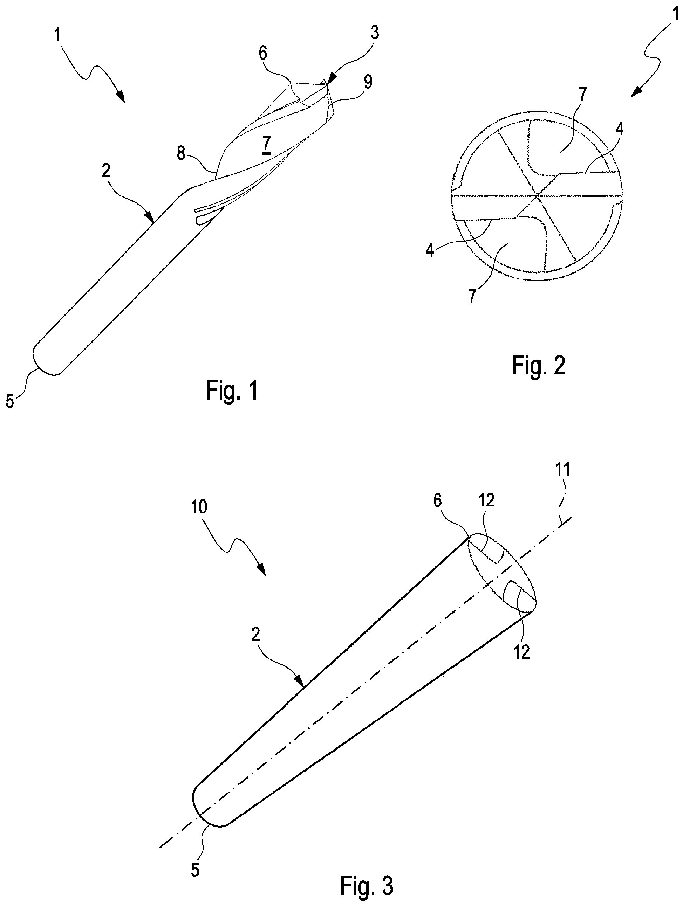

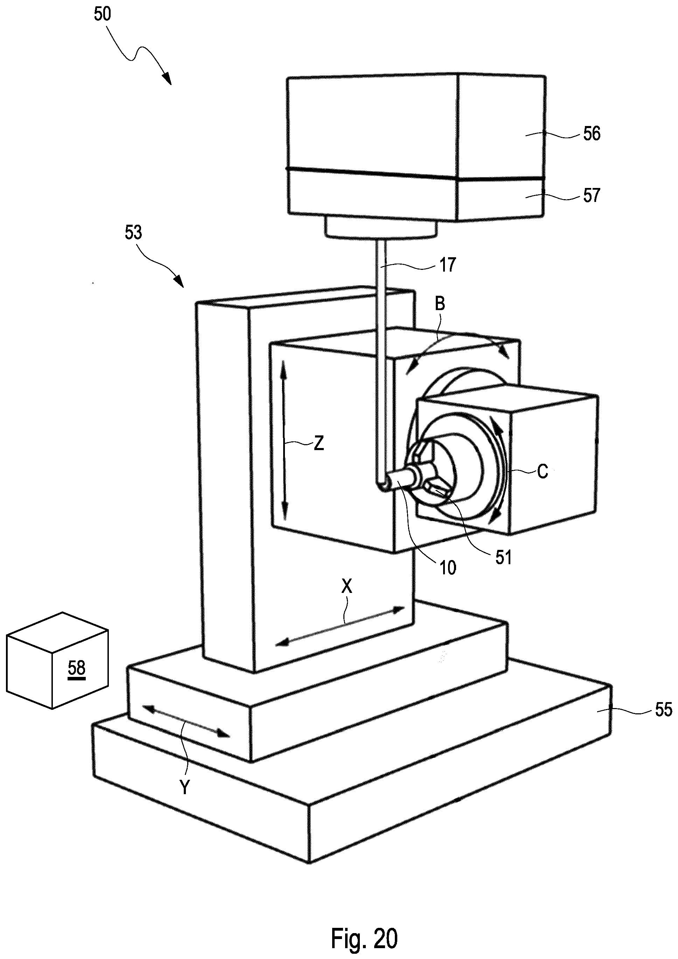

In den Figuren 1 bis 19 ist ein Ausführungsbeispiel eines mit dem erfindungsgemäßen Verfahren bearbeiteten Werkstücks in verschiedenen Bearbeitungsstufen dargestellt. Die Laserbearbeitungsvorrichtung 50, mit der das Verfahren durchgeführt wird, ist in Figur 20 dargestellt. Figur 1 zeigt das aus dem Werkstück hervorgegangene Werkzeug 1. Es handelt sich um einen Bohrer mit einem länglichen Schaft 2 und einem Kopf 3. Der Kopf 3 ist mit zwei Schneidkanten 4 ausgestattet. Der Schaft 2 weist ein erstes Schaftende 5 auf, mit dem das zu dem Werkzeug 1 gehörende Werkstück 10 in eine Werkstück-Fixiereinrichtung 51 der Laserbearbeitungsvorrichtung 50 eingeführt und festgespannt wird. Das erste Schaftende 5 dient ferner dazu, das Werkzeug an seinem späteren Einsatzort anzuordnen, beispielsweise in einer Werkzeugaufnahme einer Maschine, welche in der Zeichnung nicht dargestellt ist. An dem dem ersten Schaftende 5 entgegen gesetzten zweiten Schaftende 6 des Schaftes 2 befindet sich der Kopf 3. Ausgehend von dem Kopf 3 am zweiten Schaftende 6 verlaufen an der Außenseite des Schaftes 2 zwei Nuten 7 schraubenförmig nach Art einer Helix. Dabei ist jeder der beiden Schneidkanten 4 je eine Nut 7 zugeordnet. Jede Nut 7 weist ein dem ersten Schaftende 5 des Schaftes zugewandtes erstes Nutende 8 und ein dem zweiten Schaftende 6 des Schaftes zugewandtes zweites Nutende 9 auf. Dabei befindet sich das zweite Nutende 9 direkt am Kopf 3 in unmittelbarer Nähe zu den Schneidkanten 4. Das erste Nutende 8 weist in axialer Richtung einen Abstand zu dem ersten Schaftende 5 auf. Insbesondere erstreckt sich die Nut nicht bis zu dem ersten Schaftende 5, da ein Abschnitt des Schaftes 2 an dem ersten Schaftende 5 für die Befestigung des Werkzeugs 1 in der Werkzeugaufnahme einer Maschine vorgesehen ist.

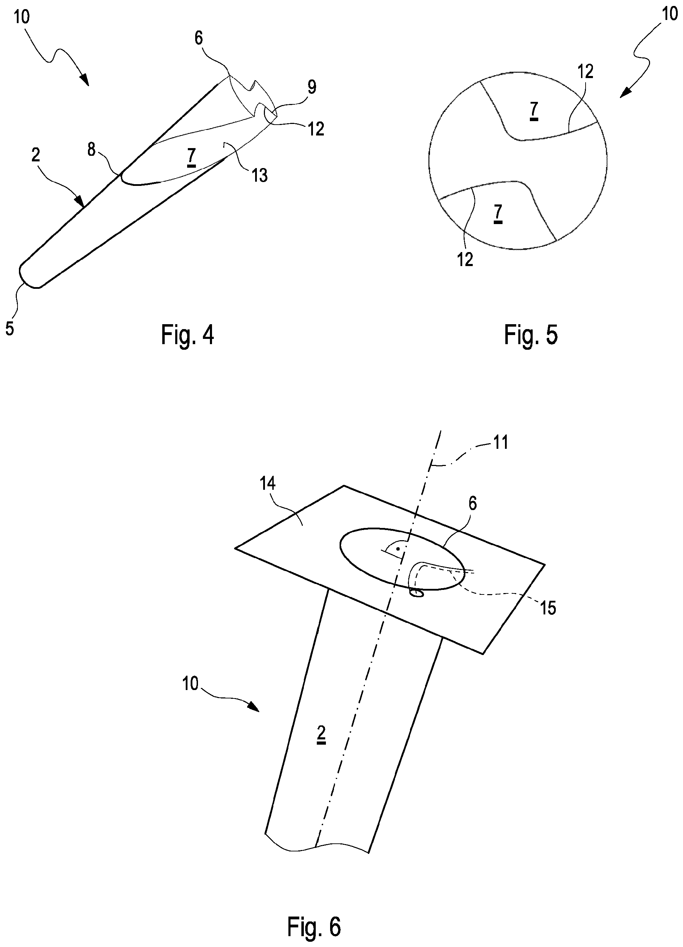

Die Nuten 7 werden mit dem erfindungsgemäßen Verfahren an der Außenseite eines in Figur 3 dargestellten Werkstücks 10 erzeugt. Zu Beginn des Verfahrens ist das Werkstück 10 ein Rohling mit der Form eines Kreiszylinders. Dies ist in Figur 3 dargestellt. Das längliche Werkstück 10 besteht im wesentlichen aus dem Schaft 2, da der Kopf des Werkstücks mit den in den Figuren 1 und 2 dargestellten Schneidkanten noch nicht an dem Werkstück 10 erzeugt wurde. Der Schaft 2 ist länglich. Er erstreckt sich entlang einer Werkstück-Längsachse 11. In Figur 3 sind an der Stirnseite am zweiten Schaftende 6 des Werkstücks 10 bereits Nut-Profil-Kurven 12 eingezeichnet, welche die Nutoberfläche der zu erzeugenden Nuten 7 an dieser Stirnseite markieren. Die Oberfläche des Werkstücks 10 an der Stirnseite des zweiten Schaftendes 6 bildet eine geometrische Ebene, die zu der Werkstück-Längsachse 11 senkrecht ausgerichtet ist. Die Nut-Profil-Kurven 12 bilden die Schnittmenge zwischen dieser geometrischen Ebene und der Nutoberfläche der zu erzeugenden Nuten. Dies ist auch in Figur 6 gezeigt.

Die Figuren 4 und 5 zeigen das Werkstück 10 nach Abschluss der Durchführung des erfindungsgemäßen Verfahrens. Die beiden Nuten 7 sind an der Außenseite des Schaftes 2 erzeugt. Sie erstrecken sich von ihrem ersten Nutende 8 bis zu ihrem zweiten Nutende 9 an der Außenseite des Schaftes 2. Im Vergleich zu dem fertigen Werkzeug 1 gemäß den Figuren 1 und 2 fehlen nur noch die Schneidkanten 4. Jede der Nuten 7 weist eine Nutoberfläche 13 auf. Diese Nutoberfläche 13 ist in mehrere Richtungen gekrümmt. Zum einen bildet jede der Nuten eine nach innen in Richtung der Werkstück-Längsachse 11 gewölbte Vertiefung gegenüber der übrigen Oberfläche des Schaftes 2. Diese übrige Oberfläche des Schaftes 2 entspricht im wesentlichen einem Zylindermantel. Zum anderen ist die Nutoberfläche 13 gekrümmt, weil die Nuten 7 bezogen auf die Werkstück-Längsachse 11 einen schraubenförmigen Verlauf nach Art einer Helix aufweisen. Die Form der Nuten 7 kann vom ersten Nutende 8 bis zum zweiten Nutende 9 gleichbleibend sein. Bei dem in der Zeichnung dargestellten Ausführungsbeispiel ist dies der Fall. Alternativ dazu kann sich die Form vom ersten Nutende bis zum zweiten Nutende ändern. So kann beispielsweise die Breite oder die Tiefe der Nut von zweiten Nutende zum ersten Nutende zu- oder abnehmen. Die in Figur 3 erkennbaren Nut-Profil-Kurven 12 an der Stirnseite des Werkstücks 10 entsprechen in den Figuren 4 und 5 den Kanten zwischen der Stirnseite am zweiten Schaftende 6 und der Nutoberfläche 13 der beiden Nuten 7.

Figur 6 zeigt den Beginn der Materialabtrags an dem zweiten Schaftende 6 des Schaftes 2 des Werkstücks 10. An diesem zweiten Schaftende befindet sich beim fertiggestellten Werkzeug der Kopf. Die Stirnseite am zweiten 'Schaftende 6 des Werkstücks 10 ist vor Beginn des Materialabtrags eine ebene Oberfläche, die senkrecht zu der Werkstück-Längsachse 11 ausgerichtet ist. Diese ebene Oberfläche entspricht zu Beginn des Materialabtrags einer geometrischen Ebene 14, die senkrecht zu der Werkstück-Längsachse 11 ist. Die in Figur 6 dargestellte Nut-Profil-Kurve ist in Figur 6 nicht mit der Bezugszahl 12 gekennzeichnet. Figur 3 zeigt die Nut-Profil-Kurve mit der Bezugszahl 12. Die Nut-Profil-Kurve 12 entspricht der Schnittmenge zwischen der geometrischen Ebene 14 und der zu erzeugenden Nutoberfläche 13 gemäß Figur 4. Figur 6 zeigt darüber hinaus eine zu der Nut-Profil-Kurve 13 parallele Laserbahn 15.

Da bei dem dargestellten Ausführungsbeispiel die Nuten 7 ihre Form vom ersten bis zum zweiten Nutende nicht ändern, ist die Nut-Profil-Kurve 12 für jede geometrische Ebene, die senkrecht zu der Werkstück-Längsachse 11 ist, in ihrer Form gleich. Dies gilt unabhängig davon, wo die geometrische Ebene die Werkstück-Längsachse 11 schneidet, so lange sich der Schnittpunkt zwischen dem ersten Nutende und dem zweiten Nutende befindet. Da die Nuten 7 einen schraubenförmigen Verlauf haben, ändert sich von Ebene zu Ebene lediglich die Position der Nut-Profil-Kurve hinsichtlich des Winkels.

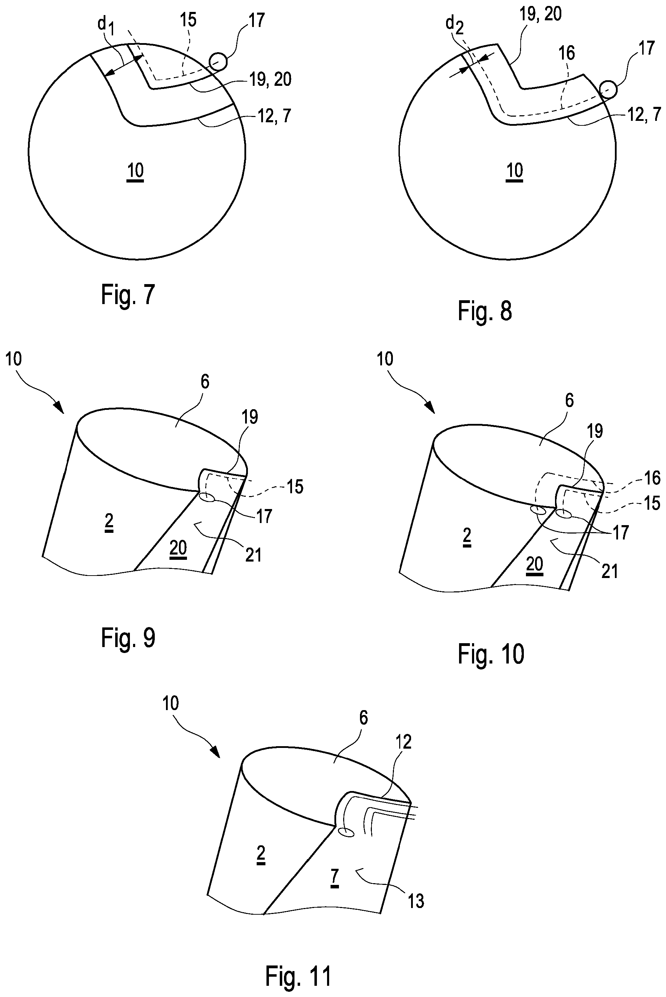

Die Figuren 7 bis 11 zeigen, wie die Laserbahnen 15, 16 relativ zu der Nut-Profil-Kurve 12 an dem Werkstück 10 definiert sind. Da das Werkstück 10 einen gewissen Durchmesser hat, muss das Material in den Nuten in zwei Schichten abgetragen werden. Die Figuren 7 und 9 zeigen die Position der Laserbahn 15 beim Materialabtrag der ersten Schicht. Sie wird als erste Laserbahn 15 bezeichnet. Die Figuren 8, 10 und 11 zeigen die Laserbahn 16 beim Materialabtrag der zweiten Schicht. Sie wird als zweite Laserbahn 16 bezeichnet.

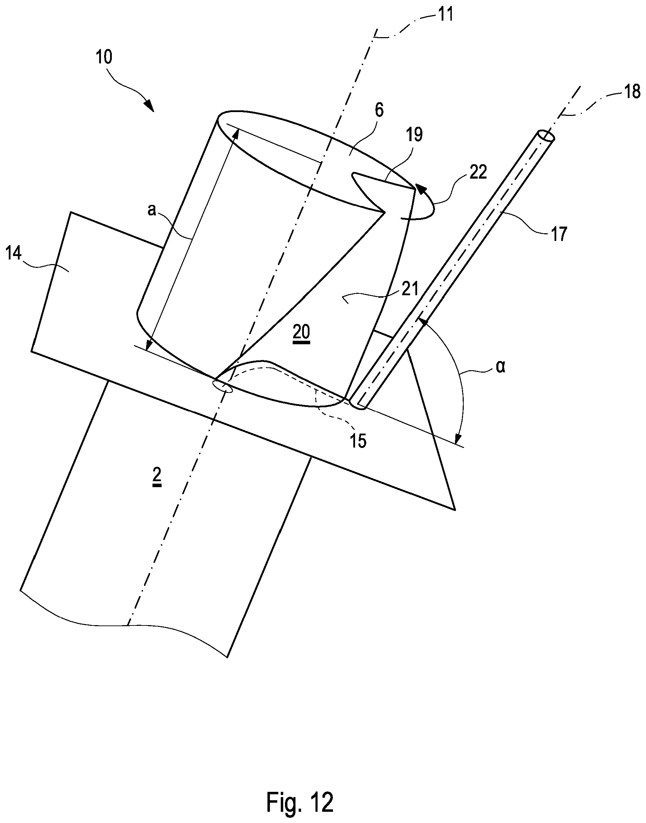

Die Nut-Profil-Kurve 12 ist in den Figuren 7, 8 und 11 dargestellt. Bis zu dieser Nut-Profil-Kurve 12 muss das Material abgetragen werden, um die Nutoberfläche 13 zu erzeugen. Für den Materialabtrag der ersten Schicht gemäß Figuren 7 und 9 wird die erste Laserbahn 15 definiert, die zu der Nut-Profil-Kurve 12 einen ersten Abstand d1 aufweist. Beim Führen des in Figur 12 dargestellten Laserstrahls 17 mit seiner Strahlachse 18 entlang dieser ersten Laserbahn 15 wird das Material entfernt, das sich außerhalb einer ersten Zwischen-Profil-Kurve 19 befindet. Figur 8 zeigt das Werkstück in einer Aufsicht, nachdem der Laserstrahl entlang der ersten Laserbahn 15 geführt und das Material außerhalb der ersten Zwischen-Profil-Kurve 19 entfernt wurde. Figur 9 zeigt das erste Ende des Schaftes 2 in einer perspektivischen Ansicht, nachdem das Material bis zu der ersten Zwischen-Profil-Kurve 19 entfernt und der Materialabtrag ausgehend von dem zweiten Schaftende 6 in Richtung des ersten Schaftendes 5 fortgeführt wurde. Dabei wird eine Zwischennut 20 erzeugt, deren Nutoberfläche 21 parallel zu der Nutoberfläche 13 der zu erzeugenden Nut 7 ist. Die Zwischennut 20 weist eine geringere Tiefe auf als die endgültige Nut 7. In den Darstellungen gemäß Figuren 7 und 8 fällt die Zwischen-Profil-Kurve 19 mit der Zwischennut 20 zusammen. Für den Materialabtrag einer zweiten Schicht wird die zweite Laserbahn 16 definiert, die zu der Nut-Profil-Kurve 12 einen Abstand d2 aufweist, wobei d2 kleiner ist als d1. Beim Führen des Laserstrahls mit seiner Strahlachse entlang der zweiten Laserbahn 16 wird der gesamte Materialabschnitt, der sich zwischen der ersten Zwischen-Profil-Kurve 19 und der Nut-Profil-Kurve 12 befindet, entfernt. Wenn der Materialabtrag ausgehend von dem zweiten Schaftende 6 in Richtung des ersten Schaftendes 5 fortgeführt wird und die Nut 7 zwischen dem ersten Nutende 8 und dem zweiten Nutende 9 erzeugt wird, entsteht bei dem Materialabtrag die Nutoberfläche 13. Figur 11 zeigt das zweite Schaftende 6 des Schaftes 2 in einer perspektivischen Ansicht nach dem Abtragen des Materials bis zu Nutoberfläche 13.

Figur 12 zeigt das Werkstück 10 mit dem Laserstrahl 17 und der Strahlachse 18 beim Abtragen von Material. Gemäß der Darstellung wurde ausgehend von dem zweiten Ende 6 des Schaftes 2 bereits ein Teil des Materials bis zu einem Abstand a von dem zweiten Ende 6 des Schaftes 2 entfernt. Dabei wurde die erste Zwischennut 20 über die Distanz a erzeugt. Die geometrische Ebene 14 wurde hierzu entlang der Werkstück-Langsachse 11 ausgehend von dem zweiten Schaftende 6 des Schaftes 2 in Richtung des ersten Schaftendes vorgeschoben. In der Darstellung gemäß Figur 12 ist die geometrische Ebene 14 senkrecht zu der Werkstück-Längsachse 11. Der Laserstrahl 17 ist beim Materialabtrag mit seiner Strahlachse 18 so ausgerichtet, dass er mit der Nutoberfläche 13 der zu erzeugenden Nut 7 oder mit der Nutoberfläche 21 der Zwischennut 20 einen Winkel zwischen 1° und 10° einschließt. Im vorliegenden Fall bedeutet dies, dass die Strahlachse 18 nicht parallel zu der Werkstücklängsachse 11 ist und nicht senkrecht auf der geometrischen Ebene 14 steht. Die Strahlachse 18 ist eine geometrische Gerade. Sie schließt mit der Werkstück-Längsachse einen Winkel zwischen 1° und 10° ein und mit der geometrischen Ebene 14 einen Winkel α zwischen 80° und 89°. Der Winkel α entspricht dabei der Differenz aus 90° und dem Winkel δ. Dabei ist die Strahlachse 18 derart in Relation zu der geometrischen Ebene 14 ausgerichtet, dass sie in die der Werkstück-Längsachse 11 entgegen gesetzte Richtung geneigt ist. Diese Ausrichtung des Laserstrahls 17 und seiner Strahlachse 18 sorgt dafür, dass eine besonders gute Oberflächenqualität der Nutoberfläche 13 erreicht wird. Die Nutoberfläche 13 ist glatt und weist eine geringe Rauheit auf. Dadurch wird eine Nachbearbeitung der Nutoberfläche 13 überflüssig.

Um den Laserstrahl 17 mit seiner Strahlachse 18 entlang der ersten Laserbahn 15 zu führen, wird das Werkstück 10 um die Werkstück-Längsachse 11 gedreht. Diese Drehung ist in Figur 12 durch einen Pfeil 22 dargestellt. Der Winkel, um den das Werkstück 10 dabei gedreht wird, ist durch die Breite der Nut 7 oder der Zwischennut 20 vorgegeben.

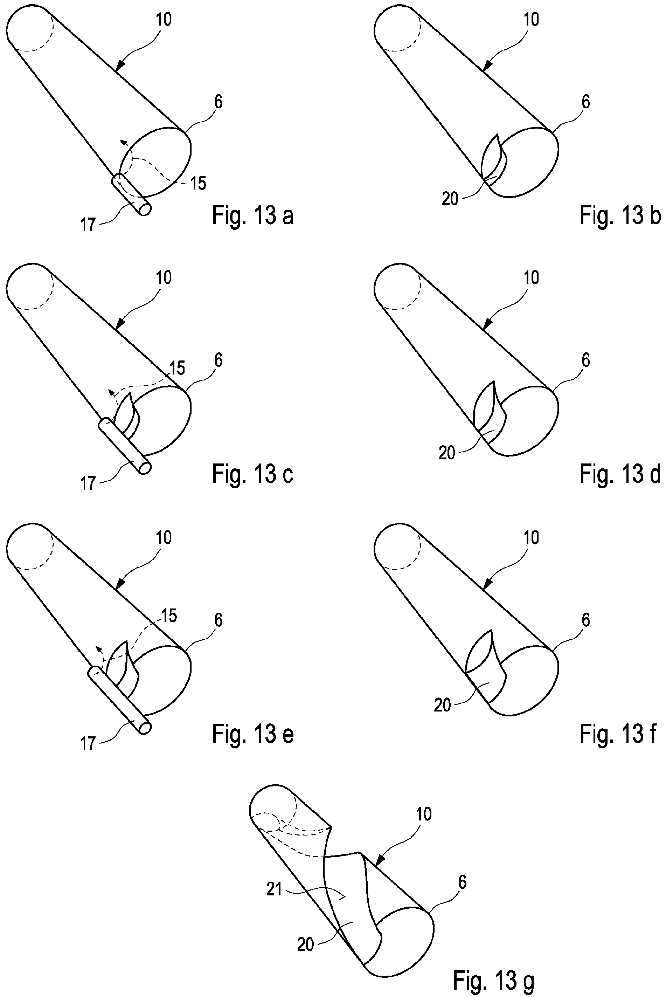

In den Figuren 13a bis 13g ist der Materialabtrag der ersten Schicht gemäß der ersten Laserbahn 15 mit Abstand d1 zwischen erster Laserbahn 15 und Nut-Profil Kurve 12 in verschiedenen Bearbeitungsstufen dargestellt. Die Nut-Profil-Kurve 12 und der Abstand d1 sind in den Figuren 13a bis 13g nicht eingezeichnet. Sie ergeben sich aus den Figuren 7, 8 und 11. Figur 13a zeigt das Werkstück 10 zu Beginn des Materialabtrags mit dem auf die Stirnseite des zweiten Schaftendes 6 des Werkstücks 10 gerichteten Laserstrahl 17 und der ersten Laserbahn 15. Figur 13b zeigt das Werkstück 10, nachdem bereits ein Teil des Materials abgetragen und ein sich vom zweiten Schaftende 6 in Richtung des ersten Schaftendes erstreckender Abschnitt der Zwischennut 20 erzeugt wurde. Figur 13c zeigt diese Bearbeitungsstufe mit dem Laserstrahl 17 und der ersten Laserbahn 15. Figuren 13d, e und f zeigen das Werkstück 10, nachdem weitere Teile des Materials einer ersten Schicht abgetragen wurden. Figur 13g zeigt den Abschnitt des Werkstücks 10, in dem sich die Zwischennut 20 zwischen dem ersten Nutende 8 und dem zweiten Nutende 9 erstreckt, nachdem die erste Schicht abgetragen und die Zwischennut 20 erzeugt wurde. Die Zwischennut 20 weist die Nutoberfläche 21 auf.

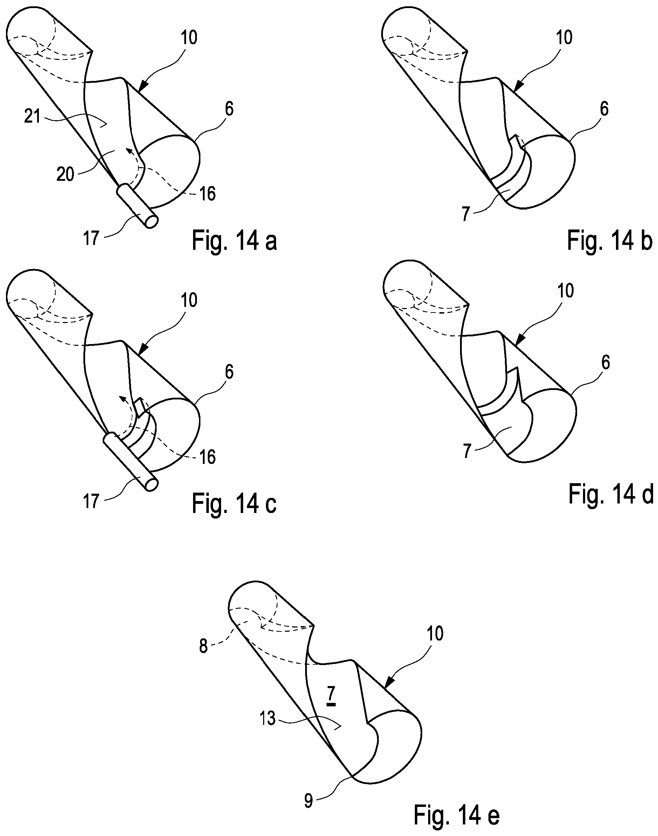

In den Figuren 14a bis 14e ist der Materialabtrag der zweiten Schicht gemäß der zweiten Laserbahn 16 mit Abstand d2 zwischen der zweiten Laserbahn 16 und der Nut-Profil-Kurve 12 in verschiedenen Bearbeitungsstufen dargestellt. Die Nut-Profil-Kurve 12 und der Abstand d2 sind in den Figuren 14a bis 14e nicht eingezeichnet. Sie ergeben sich aus den Figuren 7, 8 und 11. Das in Figur 14a dargestellte Werkstück 10 entspricht dem Werkstück 10 in Figur 13g. Figur 14a zeigt zusätzlich den Laserstrahl 17 und die zweite Laserbahn 16. Die Figuren 14b bis 14c zeigen das Werkstück 10, nachdem ein Teil des Materials der zweiten Schicht abgetragen ist. Figur 14e zeigt den Abschnitt des Werkstücks 10, in dem sich die Nut 7 zwischen dem ersten Nutende 8 und dem zweiten Nutende 9 erstreckt, nachdem die zweite Schicht abgetragen und die Nut 7 erzeugt wurde. Die Nut 7 weist die Nutoberfläche 13 auf.

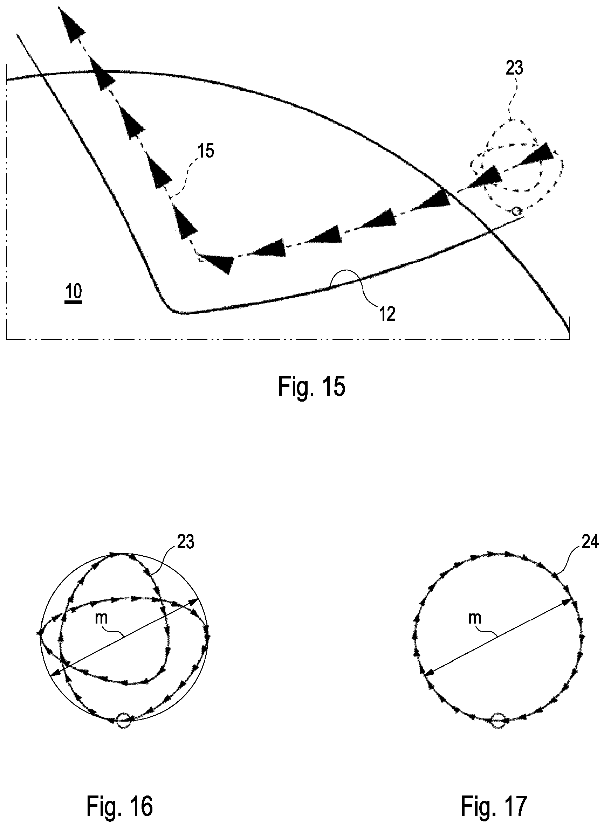

Figur 15 zeigt den Effekt, den der Einsatz einer in Figur 20 dargestellten Laserstrahl-Ablenkeinrichtung 57 hat. Diese sorgt für eine zweite Bewegung des Laserstrahls 17 mit seiner Strahlachse 18, wobei die zweite Bewegung der ersten Bewegung des Laserstrahls 17 mit seiner Strahlachse 18 entlang der zur Nut-Profil-Kurve 12 parallelen ersten Laserbahn 15 überlagert ist. Die zweite Bewegung sorgt für eine schleifenförmige Führung des Laserstrahls 17 mit seiner Strahlachse 18. In den Figuren 16 und 17 sind exemplarisch zwei mögliche Kurven 23 und 24 dargestellt, entlang denen der Laserstrahl 17 mit seiner Strahlachse 18 bei der zweiten Bewegung geführt werden kann. Beide Kurven sind geschlossen, wobei die Kurve 23 unregelmäßig geformt ist und die Kurve 24 einen Kreis darstellt. Beiden Bewegungen kann ein Durchmesser m zugeordnet werden. Die Geschwindigkeit, mit der die zweite Bewegung ausgeführt wird, ist größer als die Geschwindigkeit der ersten Bewegung. Die zweite Bewegung des Laserstrahls hat den Effekt, dass der Materialabtrag entlang der Laserbahnen 15, 16 nicht nur in einem durch den Durchmesser des Laserstrahls an der Auftreffstelle auf die Werkstückoberfläche vorgegeben Bereich erfolgt, sondern in einem durch den Durchmesser m der Kurven 23, 24 der zweiten Bewegung vorgegebenen Bereich.

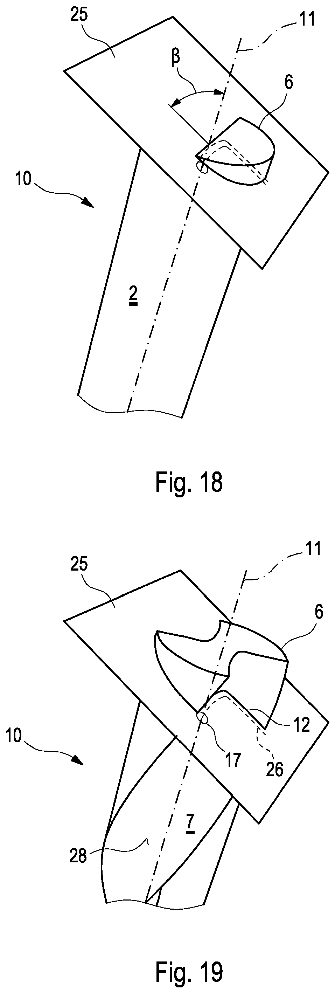

Die Figuren 18 und 19 zeigen ein Ausführungsbeispiel des erfindungsgemäßen Verfahrens, bei dem die geometrische Ebene 25 nicht senkrecht zu der Werkstück-Längsachse 11 ausgerichtet ist, sondern unter einem Winkel β von 70°. Auch in diesem Fall verläuft die Laserbahn 26 in der geometrischen Ebene 25 parallel zu der Nut-Profil-Kurve 27, die sich als Schnittmenge aus der zu erzeugenden Nutoberfläche 28 der Nut 7 und der geometrischen Ebene 25 ergibt. Abgesehen von dem unterschiedlichen Winkel zwischen der Werkstück-Längsachse 11 und der geometrischen Ebene 25 entspricht das Verfahren gemäß Figuren 18 und 19 dem Verfahren gemäß Figuren 3 bis 17.

In Figur 20 ist die Laserbearbeitungsvorrichtung 50 zur Durchführung des Verfahrens dargestellt. Die Laserbearbeitungsvorrichtung 50 umfasst eine Werkstück-Fixiereinrichtung 51, welche ein Werkstück 10 aufnimmt und fixiert, eine Werkstück-Bewegungseinrichtung 53, welche das in der Fixiereinrichtung angeordnete Werkstück 10 relativ zu einer Vorrichtungsbasis 55 bewegt, einen Laser 56, der den Laserstrahl 17 erzeugt und eine Laserstrahl-Ablenkeinrichtung 57, welche den Laserstrahl 17 führt. Die Werkstück-Bewegungseinrichtung 53 weist im vorliegenden Fall drei lineare Achsen X, Y, Z und zwei Rotationsachsen B und C auf. Die Rotationsachse C sorgt dabei für eine Rotation des in der Werkstück-Fixiereinrichtung 51 angeordneten Werkstücks 10 um eine geometrische Werkstück-Rotationsachse, welche sich durch das Werkstück 10 hindurch erstreckt. Bevorzugt wird das Werkstück 10 derart in der Werkstück-Fixiereinrichtung 51 angeordnet, dass die Werkstück-Rotationsachse mit der Werkstück-Längsachse 11 zusammenfällt. Die Laserstrahl-Ablenkeinrichtung 57 bewegt und führt den Laserstrahl 17 in drei verschiedene Richtungen im Raum. Dabei wird der Laserstrahl 17 entlang eines in Figur 18 nicht dargestellten Laserpfads relativ zum Werkstück 10 bewegt. Hierzu umfasst die Laserstrahl-Ablenkeinrichtung 57 mehrere Spiegel, welche den Laserstrahl gezielt umlenken können. Darüber hinaus ist die Laserstrahl-Ablenkeinrichtung mit mindestens einer Linse ausgestattet, welche den Laserstrahl auf die Oberfläche des Werkstücks 10 fokussiert. Die Spiegel und die Linse sind in der Zeichnung nicht dargestellt. Eine Steuerungseinrichtung 58 steuert die Fixiereinrichtung 51, die Werkstück-Bewegungseinrichtung 53, den Laser 56 und die Laserstrahl-Ablenkeinrichtung 57, um das Verfahren zur Bearbeitung des Werkstücks durchzuführen.

### Bezugszahlen

- 1: Werkzeug
- 2: Schaft
- 3: Kopf
- 4: Schneidkante
- 5: erstes Schaftende
- 6: zweites Schaftende
- 7: Nut
- 8: erstes Nutende
- 9: zweites Nutende
- 10: Werkstück
- 11: Werkstück-Längsachse
- 12: Nut-Profil-Kurve
- 13: Nutoberfläche
- 14: geometrische Ebene
- 15: erste Laserbahn
- 16: zweite Laserbahn
- 17: Laserstrahl
- 18: Strahlachse
- 19: erste Zwischen-Profil-Kurve
- 20: Zwischennut
- 21: Nutoberfläche der Zwischennut
- 22: Pfeil für Drehung
- 23: Laserstrahl-Ablenk-Kurve
- 24: Laserstrahl-Ablenk-Kurve
- 25: geometrische Ebene
- 26: Laserbahn
- 27: Nut-Profil-Kurve
- 28: Nutoberfläche
- 50: Laserbearbeitungsvorrichtung
- 51: Werkstück-Fixiereinrichtung
- 52 53: Werkstück-Bewegungseinrichtung
- 55: Vorrichtungsbasis
- 56: Laser
- 57: Laserstrahl-Ablenkeinrichtung
- 58: Steuerungseinrichtung

## Patentansprüche

1. Verfahren zur laserbasierten Bearbeitung eines länglichen Werkstücks (10) mit einem Schaft (2), der sich in Richtung einer Werkstück-Längsachse (11) erstreckt,
wobei durch Materialabtrag mittels eines Laserstrahls (17) an dem Werkstück (10) mindestens eine Nut (7) mit definierter Nutoberfläche (13, 28) erzeugt wird und die Nut (7) sich zumindest entlang eines Abschnitts an der Außenseite des Schaftes (2) zwischen einem ersten Nutende (8) und einem zweiten Nutende (9) erstreckt, wobei das erste Nutende (8) in axialer Richtung bezogen auf die Werkstück-Längsachse (11) zu dem zweiten Nutende (9) versetzt ist,
unter Verwendung einer Laserbearbeitungsvorrichtung (50), welche umfasst
- eine das Werkstück (10) aufnehmende und fixierende Werkstück-Fixiereinrichtung (51),
- eine Werkstück-Bewegungseinrichtung (53), welche die Werkstück-Fixiereinrichtung (51) relativ zu einer Vorrichtungsbasis (55) bewegt, und
- einen Laser (56), dessen Laserstrahl (17) mit seiner geometrischen Strahlachse (18) auf das in der Werkstück-Fixiereinrichtung (51) aufgenommene Werkstück (10) gerichtet ist,
wobei die Laserbearbeitungsvorrichtung (50) ausgebildet ist, das in der Werkstück-Fixiereinrichtung (51) angeordnete Werkstück (10) relativ zu dem Laserstrahl (17) auszurichten und den Laserstrahl (17) relativ zu dem Werkstück (10) zu bewegen,
mit folgenden Verfahrensschritten:
Anordnen des Werkstücks (10) in der Werkstück-Fixiereinrichtung (51),
derart dass ein erstes Schaftende (5) des Schaftes (2) in der Werkstück-Fixiereinrichtung (51) aufgenommen ist,
Abtragen von Material mit dem Laserstrahl (17) ausgehend von einem dem ersten Schaftende (5) abgewandten zweiten Schaftende (6) des Schaftes (2) in Richtung des ersten Schaftendes (5) oder in umgekehrter Richtung, wobei die Nut (7) zwischen dem ersten Nutende (8), welches dem ersten Schaftende (5) zugewandt ist, und dem zweiten Nutende (9), welches dem zweiten Schaftende (6) zugewandt ist, geformt wird,
wobei der Laserstrahl (17) mit seiner Strahlachse (18) auf die Oberfläche des Werkstücks (10) gerichtet und entlang einer Laserbahn (15, 16, 26) geführt wird,
**dadurch gekennzeichnet,**
**dass** die Laserbahn (15, 16, 26) ausschließlich parallel zu einer Nut-Profil-Kurve (12, 27) verläuft,
wobei die Nut-Profil-Kurve (12, 27) der Schnittmenge zwischen der zu erzeugenden Nutoberfläche (13, 28) und einer geometrischen Ebene (14, 25) entspricht, die mit der Werkstück-Längsachse (11) einen Winkel β einschließt mit 90° ≥ β ≥ Steigungswinkel der Nut, und wobei die geometrische Ebene (14, 25) zusammen mit der Nut-Profil-Kurve (12, 27) und der Laserbahn (15, 16, 26) während des Materialabtrags zwischen dem ersten Nutende (8) und dem zweiten Nutende (9) in axialer Richtung bezogen auf die Werkstücks-Längsachse (11) verschoben wird,
**dass** der Abstand d zwischen der Nut-Profilkurve (12, 27) und der Laserbahn (15, 16, 26) während des gesamten Materialabtrags zwischen dem ersten Nutende (8) und dem zweiten Nutende (9) fest vorgegeben ist und unverändert bleibt,
**dass** der Abstand d derart vorgegeben ist, dass das Material des Werkstücks (10), das sich in der geometrischen Ebene (14, 25) auf der der Nut-Profil-Kurve (12, 27) abgewandten Seite der Laserbahn (15, 16, 26) befindet, beim Führen des Laserstrahls (17) entlang der Laserbahn (15, 16, 26) aufgrund der Leistungsdichte des Laserstrahls (17) vollständig sublimiert oder verdampft,
**dass** der Laserstrahl (17) mit seiner Strahlachse (18) derart entlang der Laserbahn (15, 16, 26) geführt wird, dass die Strahlachse (18) an dem Auftreffpunkt auf das Werkstück (10) mit einer Tangente an die zu erzeugende Nutoberfläche einen Winkel δ einschließt, wobei 1° ≤ δ ≤ 10°.

2. Verfahren nach Anspruch 1, **dadurch gekennzeichnet, dass** das Material in mehreren Schichten abgetragen wird, wobei der Laserstrahl (17) während des Abtragens einer sich vom ersten Nutende (8) bis zum zweiten Nutende (9) erstreckenden ersten Schicht entlang einer zu der Nut-Profil-Kurve (12, 27) parallelen ersten Laserbahn (15) geführt wird, die während des Abtragens der ersten Schicht einen ersten Abstand d1 zu der Nut-Profil-Kurve (12, 27) aufweist, und wobei der Laserstrahl (17) während des Abtragens einer sich vom ersten Nutende (8) bis zum zweiten Nutende (9) erstreckenden zweiten Schicht entlang einer zu der Nut-Profil-Kurve (12, 27) parallelen zweiten Laserbahn (16) geführt wird, die während des Abtragens der zweiten Schicht einen zweiten Abstand d2 zu der Nut-Profil-Kurve (12, 27) aufweist, und der zweite Abstand d2 kleiner ist als der erste Abstand d1.

3. Verfahren nach Anspruch 2, **dadurch gekennzeichnet, dass** in weiteren Schichten entlang weiterer zu der Nut-Profil-Kurve (12, 27) parallelen Laserbahnen mit abnehmenden Abständen zu der Nut-Profil-Kurve (12, 27) Material abgetragen wird, bis die Nutoberfläche (13, 28) erzeugt ist.

4. Verfahren nach einem der vorhergehenden Ansprüche, **dadurch gekennzeichnet, dass** der Materialabtrag mittels eines gepulsten Laserstrahls (17) erfolgt.

5. Verfahren nach Anspruch 4, **dadurch gekennzeichnet, dass** die Laserpulse eine Pulsdauer von 10ps oder weniger als 10ps aufweisen.

6. Verfahren nach einem der vorhergehenden Ansprüche, **dadurch gekennzeichnet, dass** der Laserstrahl (17) mehrfach entlang der zu der Nut-Profil-Kurve (12, 27) parallelen Laserbahn (15, 16, 26) geführt wird, und dass der Laserstrahl (17) dabei entlang der Laserbahn (15, 16, 26) zunächst in die eine Richtung und dann in die entgegen gesetzte Richtung bewegt wird.

7. Verfahren nach einem der vorhergehenden Ansprüche, **dadurch gekennzeichnet, dass** nach dem Führen des Laserstrahls (17) entlang der zu der Nut-Profil-Kurve (12, 27) parallelen Laserbahn (15, 16, 26) von einem Ende zum anderen Ende dieser Laserbahn (15, 16) das Werkstück (10) mit der Werkstück-Bewegungseinrichtung (53) in Richtung der Werkstück-Längsachse (11) bewegt wird und dabei das Werkstück (10) relativ zu dem Laserstrahl (17) vorgeschoben wird.

8. Verfahren nach einem der vorhergehenden Ansprüche, **dadurch gekennzeichnet, dass** das Werkstück (10) durch die Werkstück-Bewegungseinrichtung (53) bei der Laserbearbeitung um die Werkstück-Längsachse (11) gedreht wird.

9. Verfahren nach einem der vorhergehenden Ansprüche, **dadurch gekennzeichnet, dass** der Abstand d zwischen Nut-Profil-Kurve (12, 27) und Laserbahn (15, 16, 26) gleich groß oder größer ist als der halbe Durchmesser des Laserstrahls (17) an seiner Auftreffstelle auf die Werkstückoberfläche.

10. Verfahren nach einem der vorhergehenden Ansprüche, **dadurch gekennzeichnet, dass** einer ersten Bewegung des Laserstrahls (17) entlang der zu der Nut-Profil-Kurve (12, 27) parallelen Laserbahn (15, 16, 26) eine zweite Bewegung des Laserstrahls (17) überlagert ist und dass diese zweite Bewegung mittels einer Laserstrahl-Ablenkungseinrichtung (57) erzeugt wird.

11. Verfahren nach Anspruch 10, **dadurch gekennzeichnet, dass** die zweite Bewegung entlang einer Laserstrahl-Ablenk-Kurve (23, 24) erfolgt, die einen Durchmesser m aufweist, und dass der Abstand d zwischen Nut-Profil-Kurve (12, 27) und der zu der Nut-Profil-Kurve (12, 27) parallelen Laserbahn (15, 16, 26) gleich groß oder größer ist als der halbe Durchmesser m der Laserstrahl-Ablenk-Kurve (23, 24) dieser zweiten Bewegung.

12. Verfahren nach einem der vorhergehenden Ansprüche, **dadurch gekennzeichnet, dass** ein Schneidwerkzeug hergestellt wird.

13. Laserbearbeitungsvorrichtung, welche eine ein Werkstück aufnehmende und fixierende Werkstück-Fixiereinrichtung (51), eine Werkstück-Bewegungseinrichtung (53), welche die Werkstück-Fixiereinrichtung (51) relativ zu einer Vorrichtungsbasis (55) bewegt und einen Laser (56) aufweist, dessen Laserstrahl (17) mit seiner geometrischen Strahlachse (18) auf das in der Werkstück-Fixiereinrichtung (51) aufgenommene Werkstück (10) gerichtet ist, wobei die Laserbearbeitungsvorrichtung (50) ausgebildet ist, das in der Werkstück-Fixiereinrichtung (51) angeordnete Werkstück (10) relativ zu dem Laserstrahl (17) auszurichten, den Laserstrahl (17) relativ zu dem Werkstück (10) zu bewegen und mit dem Laserstrahl (17) an dem Werkstück (10) Material abzutragen, **dadurch gekennzeichnet, dass** die Laserbearbeitungsvorrichtung (50) mit einer Steuerungseinrichtung (58) ausgestattet ist, die die Laserbearbeitungsvorrichtung (50) gemäß einem der vorhergehenden Ansprüche derart steuert, dass an einem in der Werkstück-Fixiereinrichtung (51) angeordneten Werkstück (10), dessen erstes Schaftende (5) des Schaftes (2) in der Werkstück-Fixiereinrichtung (51) aufgenommen ist, folgende Verfahrensschritte durchgeführt werden:
Abtragen von Material mit dem Laserstrahl (17) ausgehend von einem dem ersten Schaftende (5) abgewandten zweiten Schaftende (6) des Schaftes (2) in Richtung des ersten Schaftendes (5) oder in umgekehrter Richtung, wobei die Nut (7) zwischen dem ersten Nutende (8), welches dem ersten Schaftende (5) zugewandt ist, und dem zweiten Nutende (9), welches dem zweiten Schaftende (6) zugewandt ist, geformt wird,
wobei der Laserstrahl (17) mit seiner Strahlachse (18) auf die Oberfläche des Werkstücks (10) gerichtet und entlang einer Laserbahn (15, 16, 26) geführt wird,
wobei die Laserbahn (15, 16, 26) ausschließlich parallel zu einer Nut-Profil-Kurve (12, 27) verläuft,
wobei die Nut-Profil-Kurve (12, 27) der Schnittmenge zwischen der zu erzeugenden Nutoberfläche (13, 28) und einer geometrischen Ebene (14, 25) entspricht, die mit der Werkstück-Längsachse (11) einen Winkel β einschließt mit 90° ≥ β ≥ Steigungswinkel der Nut, und wobei die geometrische Ebene (14, 25) zusammen mit der Nut-Profil-Kurve (12, 27) und der Laserbahn (15, 16, 26) während des Materialabtrags zwischen dem ersten Nutende (8) und dem zweiten Nutende (9) in axialer Richtung bezogen auf die Werkstücks-Längsachse (11) verschoben wird,
wobei der Abstand d zwischen der Nut-Profilkurve (12, 27) und der Laserbahn (15, 16, 26) während des gesamten Materialabtrags zwischen dem ersten Nutende (8) und dem zweiten Nutende (9) fest vorgegeben ist und unverändert bleibt,
wobei der Abstand d derart vorgegeben ist, dass das Material des Werkstücks (10), das sich in der geometrischen Ebene (14, 25) auf der der Nut-Profil-Kurve (12, 27) abgewandten Seite der Laserbahn (15, 16, 26) befindet, beim Führen des Laserstrahls (17) entlang der Laserbahn (15, 16, 26) aufgrund der Leistungsdichte des Laserstrahls (17) vollständig sublimiert oder verdampft,
wobei der Laserstrahl (17) mit seiner Strahlachse (18) derart entlang der Laserbahn (15, 16, 26) geführt wird, dass die Strahlachse (18) an dem Auftreffpunkt auf das Werkstück (10) mit einer Tangente an die zu erzeugende Nutoberfläche einen Winkel δ einschließt, wobei 1° ≤ δ ≤ 10°.

14. Laserbearbeitungsvorrichtung nach Anspruch 13, **dadurch gekennzeichnet, dass** sie mit einer Laserstrahl-Ablenkungseinrichtung (57) ausgestattet ist.

## Claims

1. Method for laser-based machining of an elongated workpiece (10) having a shaft (2) which extends in the direction of a longitudinal axis (11) of the workpiece,
wherein at least one groove (7) with a defined groove surface (13, 28) is formed on the workpiece (10) by material removal with a laser beam (17) and the groove (7) extends at least along a section on the outside of the shaft (2) between a first groove end (8) and a second groove end (9), wherein the first groove end (8) is offset in the axial direction with respect to the longitudinal axis (11) of the workpiece relative to the second groove end (9),
using a laser machining device (50), which comprises
- a workpiece fixing device (51) which receives and fixes the workpiece (10),
- a workpiece movement device (53) which moves the workpiece fixing device (51) relative to a device base (55), and
- a laser (56), whose laser beam (17) is directed with its geometric beam axis (18) onto the workpiece (10) received in the workpiece fixing device (51),
wherein the laser machining device (50) is designed to align the workpiece (10) arranged in the workpiece fixing device (51) relative to the laser beam (17) and to move the laser beam (17) relative to the workpiece (10),
with the following method steps:
arranging the workpiece (10) in the workpiece fixing device (51) so that a first shaft end (5) of the shaft (2) is received in the workpiece fixing device (51),
removing material with the laser beam (17) starting from a second shaft end (6) of the shaft (2) facing away from the first shaft end (5) in the direction of the first shaft end (5) or in the opposite direction, wherein the groove (7) is formed between the first groove end (8), which faces the first shaft end (5), and the second groove end (9), which faces the second shaft end (6),
wherein the beam axis (18) of the laser beam (17) is directed onto the surface of the workpiece (10) and is guided along a laser path (15, 16, 26),
**characterized in that**
the laser path (15, 16, 26) extends exclusively parallel to a groove profile curve (12, 27),
wherein the groove profile curve (12, 27) corresponds to the intersection between the groove surface (13, 28) to be produced and a geometric plane (14, 25) which forms an angle β with the longitudinal axis (11) of the workpiece, where 90° ≥ β ≥ the angle of inclination of the groove, and
wherein the geometric plane (14, 2 5) together with the groove profile curve (12, 27) and the laser path (15, 16, 26) is displaced during the material removal between the first groove end (8) and the second groove end (9) in the axial direction relative to the workpiece longitudinal axis (11),
the distance d between the groove profile curve (12, 27) and the laser beam path (15, 16, 26) is fixed and does not change during the entire material removal between the first groove end (8) and the second groove end (9),
the the distance d is predetermined such that the material of the workpiece (10) located in the geometrical plane (14, 25) on the side of the laser path (15, 16, 26) facing away from the groove profile curve (12, 27) is completely sublimed or vaporized when the laser beam (17) is guided along the laser path (15, 16, 26) due to the power density of the laser beam (17),
the laser beam (17) is guided along the laser path (15, 16, 26) with its beam axis (18) so that the beam axis (18) forms an angle δ with a tangent to the groove surface to be produced at the point of impact on the workpiece (10), where 1° ≤ δ ≤ 10°.

2. Method according to claim 1, **characterised in that** the material is removed in several layers, wherein the laser beam (17) is guided along a first laser path (15) parallel to the groove profile curve (12, 27) during the removal of a first layer extending from the first groove end (8) to the second groove end (9), wherein the laser path (15) layer has a first distance d1 from the groove profile curve (12, 27), and wherein the laser beam (17) is guided along a second laser path (16) parallel to the groove profile curve (12, 27) during the removal of a second layer extending from the first groove end (8) to the second groove end (9), wherein the laser path (16) has a second distance d2 from the groove profile curve (12, 27) during the removal of the second layer and wherein the second distance d2 is smaller than the first distance d1.

3. Method according to claim 2, **characterised in that** material is removed in further layers along further laser paths parallel to the groove profile curve (12, 27) with decreasing distances to the groove profile curve (12, 27) until the groove surface (13, 28) is produced.

4. Method according to one of the preceding claims, **characterised in that** the material removal is carried out by means of a pulsed laser beam (17).

5. Method according to claim 4, **characterised in that** the laser pulses have a pulse duration of 10 ps or less than 10 ps.

6. Method according to one of the preceding claims, **characterised in that** the laser beam (17) is guided several times along the laser path (15, 16, 26) parallel to the groove profile curve (12, 27), and **in that** the laser beam (17) is moved along the laser path (15, 16, 26) first in one direction and then in the opposite direction.

7. Method according to one of the preceding claims, **characterised in that** after guiding the laser beam (17) along the laser path (15, 16, 26) parallel to the groove profile curve (12, 27) from one end to the other of this laser path (15, 16), the workpiece (10) is moved with the workpiece movement device (53) in the direction of the longitudinal axis (11) of the workpiece, and the workpiece (10) is thereby advanced relative to the laser beam (17).

8. Method according to one of the preceding claims, **characterised in that** the workpiece (10) is rotated about the longitudinal axis (11) of the workpiece by the workpiece movement device (53) during the laser machining.

9. Method according to one of the preceding claims, **characterised in that** the distance d between the groove profile curve (12, 27) and the laser path (15, 16, 26) is equal to or greater than half the diameter of the laser beam (17) at its point of impact on the workpiece surface.

10. Method according to one of the preceding claims, **characterised in that** a first movement of the laser beam (17) along the laser path (15, 16, 26) parallel to the groove profile curve (12, 27) is superimposed by a second movement of the laser beam (17) and that this second movement is generated by means of a laser beam deflection device (57).

11. Method according to claim 10, **characterised in that** the second movement takes place along a laser beam deflection curve (23, 24) having a diameter m, and **in that** the distance d between the groove profile curve (12, 27) and the laser path (15, 16, 26) is equal or greater than half the diameter m of the laser beam deflection curve (23, 24) of this second movement.

12. Method according to one of the preceding claims, **characterised in that** a cutting tool is produced.

13. Laser machining device, which has a workpiece fixing device (51) which receives and fixes a workpiece, a workpiece movement device (53) which moves the workpiece fixing device (51) relative to a device base (55), and a laser (56) whose laser beam (17) is directed with its geometric beam axis (18) onto the workpiece (10) received in the workpiece fixing device (51), wherein the laser machining device (50) is designed to align the workpiece (10) arranged in the workpiece fixing device (51) relative to the laser beam (17), to move the laser beam (17) relative to the workpiece (10) and to remove material from the workpiece (10) with the laser beam (17), **characterised in that** the laser machining device (50) has a control device (58) which controls the laser machining device (50) according to one of the preceding claims in such a way that the following methods steps are carried out on a workpiece (10) arranged in the workpiece fixing device (51) whose first shaft end (5) of the shaft (2) is received in the workpiece fixing device (51):
removing material with the laser beam (17) starting from a second shaft end (6) of the shaft (2) facing away from the first shaft end (5) in the direction of the first shaft end (5) or in the opposite direction, wherein the groove (7) is formed between the first groove end (8), which faces the first shaft end (5), and the second groove end (9), which faces the second shaft end (6),
wherein the beam axis (18) of the laser beam (17) is directed onto the surface of the workpiece (10) and is guided along a laser path (15, 16, 26), wherein the laser path (15, 16, 26) extends exclusively parallel to a groove profile curve (12, 27),
wherein the groove profile curve (12, 27) corresponds to the intersection between the groove surface (13, 28) to be produced and a geometric plane (14, 25) which forms an angle β with the longitudinal axis (11) of the workpiece, where 90° ≥ β ≥ the angle of inclination of the groove, and
wherein the geometric plane (14, 2 5) together with the groove profile curve (12, 27) and the laser path (15, 16, 26) is displaced during the material removal between the first groove end (8) and the second groove end (9) in the axial direction relative to the workpiece longitudinal axis (11),
wherein the distance d between the groove profile curve (12, 27) and the laser beam path (15, 16, 26) is fixed and does not change during the entire material removal between the first groove end (8) and the second groove end (9),
wherein the distance d is predetermined such that the material of the workpiece (10) located in the geometrical plane (14, 25) on the side of the laser path (15, 16, 26) facing away from the groove profile curve (12, 27) is completely sublimed or vaporized when the laser beam (17) is guided along the laser path (15, 16, 26) due to the power density of the laser beam (17),
wherein the laser beam (17) is guided along the laser path (15, 16, 26) with its beam axis (18) so that the beam axis (18) forms an angle δ with a tangent to the groove surface to be produced at the point of impact on the workpiece (10), where 1° ≤ δ ≤ 10°.

14. Laser machining device according to claim 13, **characterised in that** it is provided with a laser beam deflection device (57).

## Revendications

1. Procédé pour l'usinage au laser d'une pièce (10) allongée comportant une tige (2) qui s'étend dans la direction d'un axe longitudinal de pièce (11), au moins une rainure (7) comportant une surface de rainure (13, 28) définie étant produite sur la pièce (10) par enlèvement de matière par le biais d'un faisceau laser (17) et la rainure (7) s'étendant au moins le long d'une section sur le côté extérieur de la tige (2) entre une première extrémité de rainure (8) et une seconde extrémité de rainure (9), la première extrémité de rainure (8) étant décalée par rapport à la seconde extrémité de rainure (9) dans la direction axiale par rapport à l'axe longitudinal de pièce (11), à l'aide d'un dispositif d'usinage au laser (50), lequel comprend
- un appareil de fixation de pièce (51) recevant et fixant la pièce (10),
- un appareil de déplacement de pièce (53), lequel déplace l'appareil de fixation de pièce (51) par rapport à une base de dispositif (55), et
- un laser (56) dont le faisceau laser (17) est dirigé avec son axe de faisceau (18) géométrique vers la pièce (10) reçue dans l'appareil de fixation de pièce (51),
le dispositif d'usinage au laser (50) étant conçu pour aligner la pièce (10) disposée dans l'appareil de fixation de pièce (51) par rapport au faisceau laser (17) et pour déplacer le faisceau laser (17) par rapport à la pièce (10),
comportant les étapes de procédé suivantes :
disposer la pièce (10) dans l'appareil de fixation de pièce (51) de telle sorte qu'une première extrémité de tige (5) de la tige (2) est reçue dans l'appareil de fixation de pièce (51),
enlever de la matière avec le faisceau laser (17) à partir d'une seconde extrémité de tige (6) de la tige (2) opposée à la première extrémité de tige (5), en direction de la première extrémité de tige (5) ou dans la direction inverse, la rainure (7) étant formée entre la première extrémité de rainure (8), qui est tournée vers la première extrémité de tige (5), et la seconde extrémité de rainure (9), qui est tournée vers la seconde extrémité de tige (6),
le faisceau laser (17) étant dirigé avec son axe de faisceau (18) vers la surface de la pièce (10) et étant guidé le long d'une trajectoire de laser (15, 16, 26),
**caractérisé en ce que**
la trajectoire de laser (15, 16, 26) s'étend exclusivement parallèlement à une courbe de profil de rainure (12, 27), la courbe de profil de rainure (12, 27) correspondant à l'intersection entre la surface de rainure (13, 28) à produire et un plan géométrique (14, 25) qui forme avec l'axe longitudinal de pièce (11) un angle β, avec 90° ≥ β ≥ angle d'inclinaison de la rainure, et le plan géométrique (14, 25), conjointement avec la courbe de profil de rainure (12, 27) et la trajectoire de laser (15, 16, 26), étant déplacé dans la direction axiale par rapport à l'axe longitudinal de pièce (11) pendant l'enlèvement de matière entre la première extrémité de rainure (8) et la seconde extrémité de rainure (9),
**en ce que** la distance d entre la courbe de profil de rainure (12, 27) et la trajectoire de laser (15, 16, 26) est prédéfinie de manière fixe et reste inchangée pendant tout l'enlèvement de matière entre la première extrémité de rainure (8) et la seconde extrémité de rainure (9),
**en ce que** la distance d est prédéfinie de telle sorte que la matière de la pièce (10), qui se trouve dans le plan géométrique (14, 25) sur le côté de la trajectoire de laser (15, 16, 26) opposé à la courbe de profil de rainure (12, 27), se sublime ou s'évapore complètement lors du guidage du faisceau laser (17) le long de la trajectoire de laser (15, 16, 26) en raison de la densité de puissance du faisceau laser (17),
**en ce que** le faisceau laser (17) est guidé avec son axe de faisceau (18) le long de la trajectoire de laser (15, 16, 26) de telle sorte que l'axe de faisceau (18) forme, au point d'impact sur la pièce (10), un angle δ avec une tangente à la surface de rainure à produire, où 1° ≤ δ ≤ 10°.

2. Procédé selon la revendication 1, **caractérisé en ce que** la matière est enlevée en plusieurs couches, le faisceau laser (17) étant guidé, pendant l'enlèvement d'une première couche s'étendant de la première extrémité de rainure (8) à la seconde extrémité de rainure (9), le long d'une première trajectoire de laser (15) parallèle à la courbe de profil de rainure (12, 27), laquelle première trajectoire de laser, pendant l'enlèvement de la première couche, est à une première distance d1 de la courbe de profil de rainure (12, 27), et le faisceau laser (17) étant guidé, pendant l'enlèvement d'une seconde couche s'étendant de la première extrémité de rainure (8) à la seconde extrémité de rainure (9), le long d'une seconde trajectoire de laser (16) parallèle à la courbe de profil de rainure (12, 27), laquelle seconde trajectoire de laser, pendant l'enlèvement de la seconde couche, est à une seconde distance d2 de la courbe de profil de rainure (12, 27), et la seconde distance d2 étant inférieure à la première distance d1.

3. Procédé selon la revendication 2, **caractérisé en ce que** de la matière est enlevée dans d'autres couches le long d'autres trajectoires de laser parallèles à la courbe de profil de rainure (12, 27) comportant des distances décroissantes par rapport à la courbe de profil de rainure (12, 27) jusqu'à ce que la surface de rainure (13, 28) soit produite.

4. Procédé selon l'une des revendications précédentes,
**caractérisé en ce que** l'enlèvement de matière est effectué par le biais d'un faisceau laser pulsé (17).

5. Procédé selon la revendication 4, **caractérisé en ce que** les impulsions laser ont une durée d'impulsion de 10 ps ou de moins de 10 ps.

6. Procédé selon l'une des revendications précédentes,
**caractérisé en ce que** le faisceau laser (17) est guidé plusieurs fois le long de la trajectoire de laser (15, 16, 26) parallèle à la courbe de profil de rainure (12, 27), et **en ce que** le faisceau laser (17) est alors déplacé le long de la trajectoire de laser (15, 16, 26) d'abord dans une direction puis dans la direction opposée.

7. Procédé selon l'une des revendications précédentes,
**caractérisé en ce qu'**après le guidage du faisceau laser (17) le long de la trajectoire de laser (15, 16, 26) parallèle à la courbe de profil de rainure (12, 27) d'une extrémité à l'autre extrémité de ladite trajectoire de laser (15, 16), la pièce (10) est déplacée avec l'appareil de déplacement de pièce (53) en direction de l'axe longitudinal de pièce (11) et la pièce (10) est alors avancée par rapport au faisceau laser (17).

8. Procédé selon l'une des revendications précédentes,
**caractérisé en ce que** la pièce (10) est tournée autour de l'axe longitudinal de pièce (11) par l'appareil de déplacement de pièce (53) lors de l'usinage au laser.

9. Procédé selon l'une des revendications précédentes,
**caractérisé en ce que** la distance d entre la courbe de profil de rainure (12, 27) et la trajectoire de laser (15, 16, 26) est supérieure ou égale à la moitié du diamètre du faisceau laser (17) à son point d'impact sur la surface de pièce.

10. Procédé selon l'une des revendications précédentes,
**caractérisé en ce qu'**à un premier déplacement du faisceau laser (17) le long de la trajectoire de laser (15, 16, 26) parallèle à la courbe de profil de rainure (12, 27) est superposé un second déplacement du faisceau laser (17), et **en ce que** ledit second déplacement est produit par le biais d'un appareil de déviation de faisceau laser (57).

11. Procédé selon la revendication 10, **caractérisé en ce que** le second déplacement est effectué le long d'une courbe de déviation de faisceau laser (23, 24) qui présente un diamètre m, et **en ce que** la distance d entre la courbe de profil de rainure (12, 27) et la trajectoire de laser (15, 16, 26) parallèle à la courbe de profil de rainure (12, 27) est supérieure ou égale à la moitié du diamètre m de la courbe de déviation de faisceau laser (23, 24) dudit second déplacement.

12. Procédé selon l'une des revendications précédentes,
**caractérisé en ce qu'**un outil de coupe est fabriqué.

13. Dispositif d'usinage au laser, lequel présente un appareil de fixation de pièce (51) recevant et fixant une pièce, un appareil de déplacement de pièce (53), lequel déplace l'appareil de fixation de pièce (51) par rapport à une base de dispositif (55) et présente un laser (56), dont le faisceau laser (17) est dirigé avec son axe de faisceau (18) géométrique vers la pièce (10) reçue dans l'appareil de fixation de pièce (51), le dispositif d'usinage au laser (50) étant conçu pour orienter la pièce (10) disposée dans l'appareil de fixation de pièce (51) par rapport au faisceau laser (17), pour déplacer le faisceau laser (17) par rapport à la pièce (10) et pour enlever de la matière sur la pièce (10) avec le faisceau laser (17), **caractérisé en ce que** le dispositif d'usinage au laser (50) est équipé d'un appareil de commande (58) qui commande le dispositif d'usinage au laser (50) conformément à l'une des revendications précédentes de telle sorte que les étapes de procédé suivantes sont exécutées sur une pièce (10) disposée dans l'appareil de fixation de pièce (51), pièce dont la première extrémité de tige (5) de la tige (2) est reçue dans l'appareil de fixation de pièce (51):
enlever de la matière avec le faisceau laser (17) à partir d'une seconde extrémité de tige (6) de la tige (2) opposée à la première extrémité de tige (5), en direction de la première extrémité de tige (5) ou dans la direction inverse, la rainure (7) étant formée entre la première extrémité de rainure (8), qui est tournée vers la première extrémité de tige (5), et la seconde extrémité de rainure (9), qui est tournée vers la seconde extrémité de tige (6),
le faisceau laser (17) étant dirigé avec son axe de faisceau (18) vers la surface de la pièce (10) et étant guidé le long d'une trajectoire de laser (15, 16, 26),
la trajectoire de laser (15, 16, 26) s'étendant exclusivement parallèlement à une courbe de profil de rainure (12, 27),
la courbe de profil de rainure (12, 27) correspondant à l'intersection entre la surface de rainure (13, 28) à produire et un plan géométrique (14, 25) qui forme avec l'axe longitudinal de pièce (11) un angle β, avec 90° ≥ β ≥ angle d'inclinaison de la rainure, et le plan géométrique (14, 25), conjointement avec la courbe de profil de rainure (12, 27) et la trajectoire de laser (15, 16, 26), étant déplacé dans la direction axiale par rapport à l'axe longitudinal de pièce (11) pendant l'enlèvement de matière entre la première extrémité de rainure (8) et la seconde extrémité de rainure (9),
la distance d entre la courbe de profil de rainure (12, 27) et la trajectoire de laser (15, 16, 26) étant prédéfinie de manière fixe et restant inchangée pendant tout l'enlèvement de matière entre la première extrémité de rainure (8) et la seconde extrémité de rainure (9),
la distance d étant prédéfinie de telle sorte que la matière de la pièce (10) qui se trouve dans le plan géométrique (14, 25) sur le côté de la trajectoire de laser (15, 16, 26) opposé à la courbe de profil de rainure (12, 27) se sublime ou s'évapore complètement lors du guidage du faisceau laser (17) le long de la trajectoire de laser (15, 16, 26) en raison de la densité de puissance du faisceau laser (17),
le faisceau laser (17) étant guidé avec son axe de faisceau (18) le long de la trajectoire de laser (15, 16, 26) de telle sorte que l'axe de faisceau (18) forme, au point d'impact sur la pièce (10), un angle δ avec une tangente à la surface de la rainure à produire, où 1° ≤ δ ≤ 10°.

14. Dispositif d'usinage au laser selon la revendication 13, **caractérisé en ce qu'**il est équipé d'un appareil de déviation de faisceau laser (57).
